# EUROPEAN PATENT APPLICATION

(11) **EP 3 905 736 A1**
(43) Date of publication of application: **03.11.2021**
(21) Application number: 20755057.5
(22) Date of filing: 17.02.2020
(51) Int. Cl.: H04W 8/00

(54) **DEVICE DISCOVERY METHOD, APPARATUS, AND SYSTEM**

(30) Priority: 15.02.2019 CN 201910121509
(71) Applicant: Huawei Technologies Co., Ltd., Longgang District, Shenzhen, Guangdong 518129, (CN)
(72) Inventor: E, Nan, Shenzhen, Guangdong 518129 (CN); WANG, Jian, Shenzhen, Guangdong 518129 (CN); LI, Hongyu, Shenzhen, Guangdong 518129 (CN); ZHAO, Wenlong, Shenzhen, Guangdong 518129 (CN)
(74) Representative: Maiwald Patent- und Rechtsanwaltsgesellschaft mbH
(86) International application number: PCT/CN2020/075575
(87) International publication number: WO 2020/164636

(57) **Abstract**

This application provides a device discovery method, apparatus, and system, and relates to the field of communications technologies, to meet a communication requirement of a future terminal. The method includes: A first terminal device performs monitoring in a first time period by using a first transceiving time sequence; and if the first terminal device receives a device discovery message from a second terminal device in the first time period, the first terminal device sends a device discovery response to the second terminal device based on the device discovery message and the first transceiving time sequence; or if the first terminal device does not receive a device discovery message from a second terminal device in the first time period, and the first terminal device does not establish a connection to another terminal device, after the first time period ends, the first terminal device performs monitoring in a second time period by using any one of the following transceiving time sequences: the first transceiving time sequence, a second transceiving time sequence, and a silent monitoring time sequence, where the second transceiving time sequence is opposite to the first transceiving time sequence, and the silent monitoring time sequence is used by the first terminal device for continuous monitoring.

## Description

### TECHNICAL FIELD

This application relates to the field of communications technologies, and in particular, to a device discovery method, apparatus, and system.

### BACKGROUND

In a vehicle to everything (vehicle to everything, V2X) scenario, terminal devices may directly communicate with each other by using a sidelink (sidelink, SL). A terminal device may discover another terminal device by using a device discovery procedure, and further establish a communication connection to the another device to exchange information.

Currently, in a long term evolution (long term evolution, LTE) system, a terminal device performs device discovery by using a physical sidelink discovery channel (physical sidelink discovery channel, PSDCH). To be specific, the terminal device sends a device discovery message by using the PSDCH, to discover another terminal device. However, with continuous advancement of research on a 5th generation (5th-generation, 5G) communications system, there are more terminal devices in the 5G system, there are more service types in the 5G system, and services provided in the 5G system tend to be more diversified. Therefore, the current device discovery manner used in LTE is not completely applicable to the 5G system, and a new device discovery method needs to be urgently proposed to meet a communication requirement of a future terminal device.

### SUMMARY

Embodiments of this application provide a device discovery method, apparatus, and system, to meet a communication requirement of a future terminal device.

To achieve the foregoing objective, the following technical solutions are used in the embodiments of this application. According to a first aspect, an embodiment of this application provides a device discovery method. The method is applied to a terminal device or a chip system in a terminal device. The method includes: The first terminal device performs monitoring in a first time period by using a first transceiving time sequence. If the first terminal device receives a device discovery message from a second terminal device in the first time period, the first terminal device sends a device discovery response to the second terminal device based on the device discovery message and the first transceiving time sequence; or if the first terminal device does not receive a device discovery message from a second terminal device in the first time period, and the first terminal device does not establish a connection to another terminal device, after the first time period ends, the first terminal device performs monitoring in a second time period by using any one of the following transceiving time sequences: the first transceiving time sequence, a second transceiving time sequence, and a silent monitoring time sequence. The second transceiving time sequence is opposite to the first transceiving time sequence, and the silent monitoring time sequence is used by the first terminal device for continuous monitoring.

A transceiving occasion of the first transceiving time sequence is opposite to a transceiving occasion of the second transceiving time sequence. A beam sending moment in the first transceiving time sequence is a beam receiving moment in the second transceiving time sequence, and a beam receiving moment in the first transceiving time sequence is a beam sending moment in the second transceiving time sequence.

In this way, when the first terminal device can detect the device discovery message from the second terminal device, it indicates that time sequences of the first terminal device and the second terminal device are synchronized, there is no need to adjust the transceiving time sequences of the first terminal device and the second terminal device, and the first terminal device may continue to send the device discovery response to the second terminal device by using the first transceiving time sequence. When the first terminal device does not detect the device discovery message from the second terminal device in the first time period, and the first terminal device is not connected to another terminal device, it indicates that the transceiving time sequence of the first terminal device is not applicable to a current communication requirement, the first terminal device may randomly select a transceiving time sequence from a plurality of available transceiving time sequences for monitoring, to improve a success rate of detection, thereby improving a success rate of device discovery, and meeting a communication requirement of a future terminal device.

In a possible design, that the first terminal device sends a device discovery response to the second terminal device based on the device discovery message and the first transceiving time sequence may be specifically implemented as follows: The first terminal device determines a sending direction of the device discovery message based on a beam identifier, and sends the device discovery response to the second terminal device based on the first transceiving time sequence and the sending direction.

In a possible design, the method further includes: The first terminal device receives resource configuration information from an access network device, where the resource configuration information is used to indicate a time-frequency resource available for the first terminal device and/or indicate a transceiving time sequence available for the first terminal device.

In a possible design, the method further includes: The first terminal device sends a resource request to the access network device, where the resource request is used to request the time-frequency resource available for the first terminal device and/or request the transceiving time sequence available for the first terminal device.

In a possible design, that the first terminal device performs monitoring may be specifically implemented as follows: The first terminal device performs monitoring by using a physical sidelink shared channel PSSCH.

In a possible design, that the first terminal device sends a device discovery response to the second terminal device may be specifically implemented as follows: The first terminal device sends the device discovery response to the second terminal device by using the PSSCH.

In other words, in this application, the terminal device performs device discovery by using the PSSCH. In the prior art, a dedicated PSDCH is separately allocated to a terminal device that performs device discovery, and when there are a relatively large quantity of terminal devices, channel overheads are relatively high. However, in this embodiment of this application, the terminal device performs device discovery by using the PSSCH, and there is no need to allocate a dedicated channel. Compared with the prior art, this application reduces channel overheads.

According to a second aspect, this application provides a device discovery method, where the method is applied to a second terminal device or a chip system of a second terminal device. The method includes: The second terminal device sends a device discovery message to a first terminal device, and receives a device discovery response from the first terminal device. The device discovery message includes a first connection identifier, and/or a beam identifier, and/or a terminal identifier, and/or an identifier of a transceiving time sequence of the second terminal device.

In a possible design, the method further includes: The second terminal device receives resource configuration information from an access network device, where the resource configuration information is used to indicate a time-frequency resource available for the second terminal device and/or indicate a transceiving time sequence available for the second terminal device.

In a possible design, the method further includes: The second terminal device sends a resource request to the access network device, where the resource request is used to request the time-frequency resource available for the second terminal device and/or request the transceiving time sequence available for the second terminal device.

In a possible design, that the second terminal device sends a device discovery message to the first terminal device may be specifically implemented as follows: The second terminal device sends the device discovery message to the first terminal device by using a physical sidelink shared channel PSSCH.

In a possible design, that the second terminal device receives a device discovery response from the first terminal device may be specifically implemented as follows: The second terminal device receives the device discovery response from the first terminal device by using the PSSCH.

According to a third aspect, this application provides a device discovery method. The method is applied to an access network device or a chip system of an access network device. The method includes: The access network device receives a resource request from a first terminal device or a second terminal device, and sends resource configuration information.

The resource request is used to request a time-frequency resource available for the first terminal device or the second terminal device, and/or request a transceiving time sequence available for the first terminal device or the second terminal device, and the resource configuration information is used to indicate the time-frequency resource available for the first terminal device or the second terminal device, and/or indicate the transceiving time sequence available for the first terminal device or the second terminal device.

In a possible design, the method further includes: The access network device receives a resource request from a first terminal device or a second terminal device, where the resource request is used to request a time-frequency resource available for the first terminal device or the second terminal device, and/or request a transceiving time sequence available for the first terminal device or the second terminal device.

According to a fourth aspect, this application provides a device discovery method, applied to a first terminal device or a chip system of a first terminal device. The method includes: The first terminal receives a first device discovery message from a second terminal, where the first device discovery message is used to indicate a transceiving time sequence used by the second terminal; and sends a device discovery response in a receive time sequence of the second terminal based on the first device discovery message.

In a possible design, the method further includes: If the first terminal does not detect the first device discovery message in a first time sequence within a preset time period, the first terminal switches a transceiving time sequence from the first time sequence to a second time sequence, where the first time sequence includes a configured time sequence, or a time sequence opposite to the configured time sequence, or a silent time sequence. The second time sequence includes the configured time sequence, or the time sequence opposite to the configured time sequence, or the silent time sequence. A receive time sequence in the time sequence opposite to the configured time sequence is a transmit time sequence in the configured time sequence, and a transmit time sequence in the time sequence opposite to the configured time sequence is a receive time sequence in the configured time sequence. The first terminal can detect a third device discovery message from another terminal.

In a possible design, that the first terminal sends a device discovery response in a receive time sequence of the second terminal based on the first device discovery message may be specifically implemented as follows: The first terminal determines a second sending direction of the device discovery response based on a beam identifier, where the second sending direction is opposite to a first sending direction; and the first terminal sends the device discovery response to the second terminal in the second sending direction in the receive time sequence of the second terminal.

In a possible design, the method further includes: The first terminal sends a resource request to an access network device, where the resource request is used to request a time-frequency resource used by the first terminal.

In a possible design, the first terminal device receives a resource configuration message from the access network device, where the resource configuration message is used to configure the time-frequency resource used by the first terminal and/or configure a transceiving time sequence used by the first terminal.

In a possible design, that the first terminal receives a first device discovery message from the second terminal may be specifically implemented as follows: The first terminal receives the first device discovery message by using a physical sidelink shared channel PSSCH.

According to a fifth aspect, this application provides a device discovery method, applied to a first terminal device or a chip system of a first terminal device. The method includes: The second terminal sends a first device discovery message to a first terminal, where the first device discovery message is used to indicate a transceiving time sequence used by the second terminal; and the second terminal receives a device discovery response from the first terminal in a receive time sequence of the second terminal.

In a possible design, that the second terminal sends a first device discovery message to a first terminal may be specifically implemented as follows: The second terminal sends the first device discovery message to the first terminal by using a PSSCH.

In a possible design, that the second terminal receives a device discovery response from the first terminal in a receive time sequence of the second terminal may be specifically implemented as follows: The second terminal receives the device discovery response from the first terminal in the receive time sequence of the second terminal by using the PSSCH.

According to a sixth aspect, this application provides a device discovery method. The method is applied to an access network device or a chip system of an access network device. The method includes: The access network device sends a resource configuration message, where the resource configuration message is used to configure a time-frequency resource used by a first terminal and configure a transceiving time sequence used by the first terminal.

In a possible design of any one of the fourth aspect to the sixth aspect, the method further includes: The access network device receives a resource request from the first terminal device, where the resource request is used to request the time-frequency resource used by the first terminal.

In a possible design of any one of the fourth aspect to the sixth aspect, the first device discovery message further includes a beam identifier, and the beam identifier is used to indicate a first sending direction of the first device discovery message.

In a possible design of any one of the fourth aspect to the sixth aspect, the device discovery response further includes at least one of a beam identifier used to indicate the second sending direction, an identifier of the first terminal, and a transceiving time sequence of the first terminal.

In a possible design of any one of the fourth aspect to the sixth aspect, the time-frequency resource includes a millimeter-wave band frequency domain resource.

According to a seventh aspect, this application provides a device discovery method, applied to a device discovery system. The system includes the first terminal device in any design of the first aspect and the second terminal device in any design of the second aspect; or the system includes the first terminal device in any design of the fourth aspect, the second terminal device in any design of the fifth aspect, and an access network device. Alternatively, the system includes the first terminal device in any design of the first aspect, the second terminal device in any design of the second aspect, and the access network device in any design of the third aspect; or the system includes the first terminal device in any design of the fourth aspect, the second terminal device in any design of the fifth aspect, and the access network device in any design of the sixth aspect. The method includes: The first terminal device performs monitoring in a first time period by using a first transceiving time sequence.

The second terminal device sends a device discovery message to the first terminal device.

If the first terminal device receives the device discovery message from the second terminal device in the first time period, the first terminal device sends a device discovery response to the second terminal device based on the device discovery message and the first transceiving time sequence.

If the first terminal device does not receive the device discovery message from the second terminal device in the first time period, and the first terminal device does not establish a connection to another terminal device, after the first time period ends, the first terminal device performs monitoring in a second time period by using any one of the following transceiving time sequences: the first transceiving time sequence, a second transceiving time sequence, and a silent monitoring time sequence. The second transceiving time sequence is opposite to the first transceiving time sequence, and the silent monitoring time sequence is used by the first terminal device for continuous monitoring.

In a possible design, the device discovery message includes a first connection identifier, and/or a beam identifier, and/or a terminal identifier, and/or an identifier of a transceiving time sequence of the second terminal device; and the beam identifier is used to indicate a sending direction of the device discovery message.

In a possible design, the first connection identifier is used to indicate that the device discovery message is sent by the second terminal device to the first terminal device after the second terminal device detects a device discovery message from the first terminal device. The device discovery response is used to indicate to establish a connection between the first terminal device and the second terminal device.

In a possible design, the first connection identifier is used to indicate that the device discovery message is not sent by the second terminal device to the first terminal device after the second terminal device detects a device discovery message from the first terminal device. The device discovery response includes a second connection identifier, and the second connection identifier is used to indicate that the first terminal device detects the device discovery message from the second terminal device.

In a possible design, that the first terminal device sends a device discovery response to the second terminal device based on the device discovery message and the first transceiving time sequence includes: The first terminal device determines a sending direction of the device discovery message based on the beam identifier, and sends the device discovery response to the second terminal device based on the first transceiving time sequence and the sending direction.

In a possible design, the transceiving time sequence is used to indicate a rule of sending a beam and/or a rule of receiving a beam, and indicate a direction of sending a beam and/or a direction of receiving a beam.

In a possible design, the method further includes: The access network device sends resource configuration information to the first terminal device, where the resource configuration information is used to indicate a time-frequency resource available for the first terminal device and/or indicate a transceiving time sequence available for the first terminal device.

The first terminal device receives the resource configuration information from the access network device.

In a possible design, the method further includes: The first terminal device sends a resource request to the access network device, where the resource request is used to request the time-frequency resource available for the first terminal device and/or request the transceiving time sequence available for the first terminal device.

In a possible design, the time-frequency resource available for the first terminal device is a preconfigured resource, the transceiving time sequence available for the first terminal device is a preconfigured time sequence, and the preconfigured time sequence includes the first transceiving time sequence, the second transceiving time sequence, or the silent monitoring time sequence.

In a possible design, that the first terminal device performs monitoring includes: The first terminal device performs monitoring by using a physical sidelink shared channel PSSCH.

In a possible design, that the first terminal device sends a device discovery response to the second terminal device includes: The first terminal device sends the device discovery response to the second terminal device by using the PSSCH.

In a possible design, the time-frequency resource includes a millimeter-wave band frequency domain resource.

According to an eighth aspect, an embodiment of this application provides a device discovery apparatus. The apparatus can implement functions of a first terminal device, for example, may be the first terminal device, or a built-in component of the first terminal device, for example, a chip system in the first terminal device. The apparatus includes a control unit, configured to: control a communications unit to perform monitoring in a first time period by using a first transceiving time sequence; further configured to: if the first terminal device receives a device discovery message from a second terminal device in the first time period, control the communications unit to send a device discovery response to the second terminal device based on the device discovery message and the first transceiving time sequence; and further configured to: if the first terminal device does not receive a device discovery message from the second terminal device in the first time period, and the first terminal device does not establish a connection to another terminal device, control the communications unit to perform, after the first time period ends, monitoring in a second time period by using any one of the following transceiving time sequences: the first transceiving time sequence, a second transceiving time sequence, and a silent monitoring time sequence, where the second transceiving time sequence is opposite to the first transceiving time sequence, and the silent monitoring time sequence is used by the first terminal device for continuous monitoring.

In a possible design, that the control unit is configured to control the communications unit to send a device discovery response to the second terminal device based on the device discovery message and the first transceiving time sequence may be specifically implemented as follows: The control unit is configured to determine a sending direction of the device discovery message based on a beam identifier, and control the communications unit to send the device discovery response to the second terminal device based on the first transceiving time sequence and the sending direction.

In a possible design, the communications unit is configured to receive resource configuration information from an access network device, where the resource configuration information is used to indicate a time-frequency resource available for the first terminal device and/or indicate a transceiving time sequence available for the first terminal device.

In a possible design, the communications unit is configured to send a resource request to the access network device, where the resource request is used to request the time-frequency resource available for the first terminal device and/or request the transceiving time sequence available for the first terminal device.

In a possible design, that the communications unit is configured to perform monitoring may be specifically implemented as follows: The communications unit is configured to perform monitoring by using a physical sidelink shared channel PSSCH.

In a possible design, that the communications unit sends a device discovery response to the second terminal device may be specifically implemented as follows: The communications unit sends the device discovery response to the second terminal device by using the PSSCH.

According to a ninth aspect, this application provides a device discovery apparatus, and the apparatus can implement functions of the second terminal device in the foregoing aspects. The apparatus includes: a communications unit, configured to send a device discovery message to a first terminal device, and receive a device discovery response from the first terminal device. The device discovery message includes a first connection identifier, and/or a beam identifier, and/or a terminal identifier, and/or an identifier of a transceiving time sequence of the second terminal device.

In a possible design, the communications unit is further configured to receive resource configuration information from an access network device, where the resource configuration information is used to indicate a time-frequency resource available for the second terminal device and/or indicate a transceiving time sequence available for the second terminal device.

In a possible design, the communications unit is further configured to send a resource request to the access network device, where the resource request is used to request the time-frequency resource available for the second terminal device and/or request the transceiving time sequence available for the second terminal device.

In a possible design, that the communications unit is configured to send the device discovery message to the first terminal device may be specifically implemented as: sending the device discovery message to the first terminal device by using a physical sidelink shared channel PSSCH.

In a possible design, that the communications unit is configured to receive the device discovery response from the first terminal device may be specifically implemented as: receiving the device discovery response from the first terminal device by using the PSSCH.

According to a tenth aspect, this application provides a device discovery apparatus, and the apparatus can implement functions of the access network device in any one of the foregoing aspects. The apparatus includes a communications unit, configured to receive a resource request from a first terminal device or a second terminal device, and further configured to send resource configuration information.

The resource request is used to request a time-frequency resource available for the first terminal device or the second terminal device, and/or request a transceiving time sequence available for the first terminal device or the second terminal device, and the resource configuration information is used to indicate the time-frequency resource available for the first terminal device or the second terminal device, and/or indicate the transceiving time sequence available for the first terminal device or the second terminal device.

In a possible design, the communications unit is further configured to receive a resource request from the first terminal device or the second terminal device, where the resource request is used to request a time-frequency resource available for the first terminal device or the second terminal device, and/or request a transceiving time sequence available for the first terminal device or the second terminal device.

According to an eleventh aspect, an embodiment of this application provides a device discovery apparatus. The apparatus can implement functions of a first terminal device, for example, may be the first terminal device, or a built-in component of the first terminal device, for example, a chip system in the first terminal device. The apparatus includes a controller, configured to: control a communications interface to perform monitoring in a first time period by using a first transceiving time sequence; further configured to: if the first terminal device receives a device discovery message from a second terminal device in the first time period, control the communications interface to send a device discovery response to the second terminal device based on the device discovery message and the first transceiving time sequence; and further configured to: if the first terminal device does not receive a device discovery message from the second terminal device in the first time period, and the first terminal device does not establish a connection to another terminal device, control the communications interface to perform, after the first time period ends, monitoring in a second time period by using any one of the following transceiving time sequences: the first transceiving time sequence, a second transceiving time sequence, and a silent monitoring time sequence, where the second transceiving time sequence is opposite to the first transceiving time sequence, and the silent monitoring time sequence is used by the first terminal device for continuous monitoring.

In a possible design, that the controller is configured to control the communications interface to send a device discovery response to the second terminal device based on the device discovery message and the first transceiving time sequence may be specifically implemented as follows: The controller is configured to determine a sending direction of the device discovery message based on a beam identifier, and control the communications interface to send the device discovery response to the second terminal device based on the first transceiving time sequence and the sending direction.

In a possible design, the communications interface is configured to receive resource configuration information from an access network device, where the resource configuration information is used to indicate a time-frequency resource available for the first terminal device and/or indicate a transceiving time sequence available for the first terminal device.

In a possible design, the communications interface is configured to send a resource request to the access network device, where the resource request is used to request the time-frequency resource available for the first terminal device and/or request the transceiving time sequence available for the first terminal device.

In a possible design, that the communications interface is configured to perform monitoring may be specifically implemented as follows: The communications interface is configured to perform monitoring by using a physical sidelink shared channel PSSCH.

In a possible design, that the communications interface sends a device discovery response to the second terminal device may be specifically implemented as follows: The communications interface sends the device discovery response to the second terminal device by using the PSSCH.

According to a twelfth aspect, this application provides a device discovery apparatus, and the apparatus can implement functions of the second terminal device in the foregoing aspects. The apparatus includes: a communications interface, configured to send a device discovery message to a first terminal device, and receive a device discovery response from the first terminal device. The device discovery message includes a first connection identifier, and/or a beam identifier, and/or a terminal identifier, and/or an identifier of a transceiving time sequence of the second terminal device.

In a possible design, the communications interface is further configured to receive resource configuration information from an access network device, where the resource configuration information is used to indicate a time-frequency resource available for the second terminal device and/or indicate a transceiving time sequence available for the second terminal device.

In a possible design, the communications interface is further configured to send a resource request to the access network device, where the resource request is used to request the time-frequency resource available for the second terminal device and/or request the transceiving time sequence available for the second terminal device.

In a possible design, that the communications interface is configured to send a device discovery message to a first terminal device may be specifically implemented as: sending the device discovery message to the first terminal device by using a physical sidelink shared channel PSSCH.

In a possible design, that the communications interface is configured to receive a device discovery response from the first terminal device may be specifically implemented as: receiving the device discovery response from the first terminal device by using the PSSCH.

According to a thirteenth aspect, this application provides a device discovery apparatus, and the apparatus can implement functions of the access network device in any one of the foregoing aspects. The apparatus includes a communications interface, configured to send resource configuration information. The resource configuration information is used to indicate a time-frequency resource available for a first terminal device or a second terminal device and/or indicate a transceiving time sequence available for the first terminal device or the second terminal device.

In a possible design, the communications interface is further configured to receive a resource request from the first terminal device or the second terminal device, where the resource request is used to request the time-frequency resource available for the first terminal device or the second terminal device, and/or request the transceiving time sequence available for the first terminal device or the second terminal device.

In a possible design of any one of the first to the third aspects and the seventh to the thirteenth aspects, the device discovery message includes a first connection identifier, and/or a beam identifier, and/or a terminal identifier, and/or an identifier of a transceiving time sequence of the second terminal device; and the beam identifier is used to indicate a sending direction of the device discovery message.

In a possible design of any one of the first to the third aspects and the seventh to the thirteenth aspects, the first connection identifier is used to indicate that the device discovery message is sent by the second terminal device to the first terminal device after the second terminal device detects a device discovery message from the first terminal device. The device discovery response is used to indicate to establish a connection between the first terminal device and the second terminal device.

In a possible design of any one of the first to the third aspects and the seventh to the thirteenth aspects, the first connection identifier is used to indicate that the device discovery message is not sent by the second terminal device to the first terminal device after the second terminal device detects a device discovery message from the first terminal device. The device discovery response includes a second connection identifier, and the second connection identifier is used to indicate that the first terminal device detects the device discovery message from the second terminal device.

In a possible design of any one of the first to the third aspects and the seventh to the thirteenth aspects, the transceiving time sequence is used to indicate a rule of sending a beam and/or a rule of receiving a beam, and indicate a direction of sending a beam and/or a direction of receiving a beam.

In a possible design of any one of the first to the third aspects and the seventh to the thirteenth aspects, the time-frequency resource available for the first terminal device is a preconfigured resource, the transceiving time sequence available for the first terminal device is a preconfigured time sequence, and the preconfigured time sequence includes the first transceiving time sequence, the second transceiving time sequence, or the silent monitoring time sequence.

A transceiving time sequence is pre-configured as a transceiving time sequence for device discovery. When the terminal device performs device discovery, the terminal device uses the pre-configured transceiving time sequence for monitoring. In this way, the terminal device does not need to select, through polling, a time sequence from a plurality of transceiving time sequences as a time sequence used for monitoring, so that power consumption of the terminal device can be reduced.

In a possible design of any one of the first to the third aspects and the seventh to the thirteenth aspects, the time-frequency resource includes a millimeter-wave band frequency domain resource. In other words, according to the foregoing method, the device discovery message, the device discovery response, and the like may be transmitted by using millimeter-wave beams. In one aspect, because a millimeter-wave beam may be directionally transmitted, a device discovery message, a device discovery response, or the like is related to a direction. A receiver may learn of a sending direction of a millimeter-wave beam based on the received millimeter-wave beam, to learn of a location relationship between a sender and the receiver. For example, the receiver is located in front of, behind, on the left side, or on the right side of the sender. In another aspect, compared with omnidirectionally receiving and sending beams in LTE, directions of different beams can be distinguished in this embodiment of this application, so that beams in different directions are spatially isolated and do not interfere with each other.

According to a fourteenth aspect, this application provides a device discovery apparatus, configured to implement functions of the first terminal device in the eighth aspect or the eleventh aspect, or configured to implement functions of the second terminal device in the ninth aspect or the twelfth aspect, or configured to implement functions of the access network device in the tenth aspect or the thirteenth aspect.

According to a fifteenth aspect, this application provides a device discovery apparatus. The apparatus has functions of implementing the device discovery method according to any one of the foregoing aspects such as the first aspect, the second aspect, the third aspect, the fourth aspect, the fifth aspect, or the sixth aspect. The function may be implemented by hardware, or may be implemented by hardware executing corresponding software. The hardware or software includes one or more modules corresponding to the foregoing functions, and the modules may include a communications unit, a control unit, a processing unit, a storage unit, and the like.

According to a sixteenth aspect, a device discovery apparatus is provided, including a processor and a memory. The memory is configured to store computer executable instructions. When the device discovery apparatus runs, the processor executes the computer executable instructions stored in the memory, so that the device discovery apparatus performs the device discovery method according to any one of the first aspect, the second aspect, the third aspect, the fourth aspect, the fifth aspect, or the sixth aspect.

According to a seventeenth aspect, a device discovery apparatus is provided, including a processor. The processor is configured to: after being coupled to a memory and reading instructions in the memory, perform the device discovery method according to any one of the first aspect to the sixth aspect according to the instructions.

According to an eighteenth aspect, an embodiment of this application provides a device discovery apparatus. The apparatus may be a chip system. The chip system includes a processor, and may further include a memory, configured to implement functions of the method described in any one of the foregoing aspects. The chip system may include a chip, or may include a chip and another discrete component.

According to a nineteenth aspect, a device discovery apparatus is provided. The apparatus may be a circuit system, the circuit system includes a processing circuit or a chip, and the processing circuit is configured to perform the device discovery method according to any one of the foregoing aspects.

According to a twentieth aspect, an embodiment of this application further provides a computer readable storage medium, including instructions. When the instructions are run on a computer, the computer is enabled to perform the method in any one of the foregoing aspects.

According to a twenty-first aspect, an embodiment of this application further provides a computer program product, including instructions. When the instructions are run on a computer, the computer is enabled to perform the method in any one of the foregoing aspects.

According to a twenty-second aspect, an embodiment of this application provides a system. The system includes the first terminal device in the eighth aspect and the second terminal device in the ninth aspect; or the system includes the first terminal device in the eighth aspect, the second terminal device in the ninth aspect, and the access network device in the tenth aspect; or the system includes the first terminal device in the eleventh aspect and the second terminal device in the twelfth aspect; or the system includes the first terminal device in the eleventh aspect, the second terminal device in the twelfth aspect, and the access network device in the thirteenth aspect.

### BRIEF DESCRIPTION OF DRAWINGS

FIG. 1 is a schematic diagram of an architecture of a communications system according to an embodiment of this application;
FIG. 2 is a schematic flowchart of a device discovery method according to an embodiment of this application;
FIG. 3(a) to FIG. 3(f) are a schematic diagram of transceiving time sequences according to an embodiment of this application;
FIG. 4 is a schematic diagram of transceiving time sequences according to an embodiment of this application;
FIG. 5 is a schematic flowchart of a device discovery method according to an embodiment of this application;
FIG. 6 is a schematic flowchart of a device discovery method according to an embodiment of this application;
FIG. 7 is a schematic flowchart of a device discovery method according to an embodiment of this application;
FIG. 8 is a schematic flowchart of a device discovery method according to an embodiment of this application;
FIG. 9 is a schematic flowchart of a device discovery method according to an embodiment of this application;
FIG. 10 is a schematic flowchart of a device discovery method according to an embodiment of this application;
FIG. 11 is a schematic flowchart of a device discovery method according to an embodiment of this application;
FIG. 12 is a schematic flowchart of a device discovery method according to an embodiment of this application;
FIG. 13 is a schematic structural diagram of a device discovery apparatus according to an embodiment of this application; and
FIG. 14 is a schematic structural diagram of a device discovery apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having" and any other variant thereof mentioned in descriptions of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in the embodiments of this application, the word such as "example" or "for example" is used to represent giving an example, an illustration, or a description. Any embodiment or design scheme described as "example" or "for example" in the embodiments of this application should not be explained as being more preferred or having more advantages than another embodiment or design scheme. Exactly, use of the word "example" or "for example" is intended to present a relative concept in a specific manner.

In addition, in the embodiments of this application, "at least one" usually refers to one or more. "A plurality of' refers to two or more. The term "and/or" describes an association relationship between associated objects and represents that three relationships may exist. For example, A and/or B may represent the following three cases: Only A exists, both A and B exist, and only B exists. The A and the B may be singular or plural. The character "/" usually indicates an "or" relationship between the associated objects.

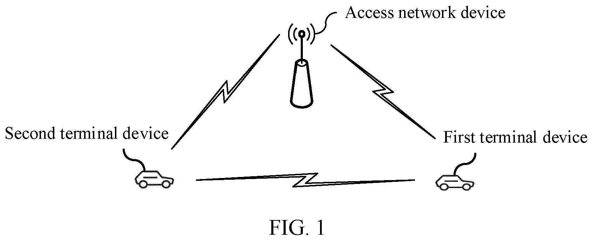

FIG. 1 shows a communications system in the embodiments of this application. The communications system includes a first terminal device, a second terminal device, and an access network device. The terminal device, for example, the first terminal device or the second terminal device, may be connected to the access network device through an air interface, so as to receive a network service. The access network device is mainly configured to implement functions such as a radio physical layer function, resource scheduling and radio resource management, radio access control, and mobility management.

In addition, the first terminal device and the second terminal device may directly communicate with each other, for example, perform V2X communication, through an SL. It is easy to understand that a resource pool used for direct communication by using the SL may be a resource pool configured by the access network device, for example, a resource pool used when an air interface connection between the first terminal device and the access network device and an air interface connection between the second terminal device and the access network device are normal; or may be resource pools preconfigured in the first terminal device and the second terminal device, for example, a device manufacturer pre-configures a resource pool in a terminal device according to a protocol before the terminal device is delivered from a factory.

For example, the first terminal device and the second terminal device directly communicate with each other by using an SL. The communication may be vehicle to vehicle (vehicle to vehicle, V2V) communication, vehicle to infrastructure (vehicle to infrastructure, V2I) communication, vehicle to network (vehicle to network, V2N) communication, vehicle to pedestrian (vehicle to pedestrian, V2P) communication, or the like, and may also be other forms of direct communication between terminal devices, for example, pedestrian to pedestrian (pedestrian to pedestrian, P2P) communication.

In addition to the SL, a wireless connection in another form or another name, for example, a future wireless communications system or a 6G system, may also be used for direct communication between terminal devices. This is not limited in this application.

The access network device may be an access network device that has a wireless transceiving function, or may be a chip system disposed in the access network device, or may be in another form. The access network device includes but is not limited to: an access point (access point, AP) in a Wi-Fi system, for example, a home wireless router, a wireless relay node, a wireless backhaul node, a transmission and reception point (transmission and reception point, TRP or transmission point, TP), an eNB, a radio network controller (radio network controller, RNC), a NodeB (node B, NB), a base station controller (base station controller, BSC), a base transceiver station (base transceiver station, BTS), a home base station (for example, a home evolved nodeB, or home node B, HNB), a baseband unit (baseband unit, BBU); or may be a 5G system such as a gNB in NR, or a transmission point (TRP or TP), or one or a group of (including a plurality of antenna panels) antenna panels of a base station in a 5G system; or may be a network node that constitutes a gNB or a transmission point, such as a baseband unit (BBU) or a distributed unit (distributed unit, DU).

In some deployments, the gNB may include a centralized unit (centralized unit, CU) and a distributed unit (distributed unit, DU). The gNB may further include a radio frequency unit (radio unit, RU). The CU implements some functions of the gNB, and the DU implements some functions of the gNB. For example, the CU implements functions of a radio resource control (radio resource control, RRC) layer, a packet data convergence protocol (packet data convergence protocol, PDCP) layer, and a service discovery application profile (service discovery application profile, SDAP) layer, and the DU implements functions of a radio link control (radio link control, RLC) layer, a media access control (media access control, MAC) layer, and a physical (PHY) layer. Information at the RRC layer eventually becomes information at the PHY layer, or is converted from information at the PHY layer. Therefore, in the architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in a radio access network (radio access network, RAN), or the CU may be classified as a network device in a core network (core network, CN). This is not limited in this application.

The terminal device may be user equipment having a wireless transceiving function or a chip system disposed in the user equipment. For example, the terminal device may also be referred to as a station (station, STA), user equipment (user equipment, UE), an access terminal, a subscriber unit, a subscriber station, a mobile station, a mobile console, a remote station, a remote terminal, a mobile device, a user terminal, a wireless communications device, a user agent, or a user device. The terminal device includes but is not limited to a mobile phone (mobile phone), a tablet computer (Pad), a computer with a wireless transceiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in transportation safety (transportation safety), a wireless terminal in smart city (smart city), a sensor device such as a monitoring terminal, and the like.

It should be understood that FIG. 1 is merely a simplified schematic diagram of an example for ease of understanding, and only terminal devices and an access network device (for example, a base station) are shown. In this embodiment of this application, the wireless communications system may further include another network device or another terminal device, which is not shown in FIG. 1.

With reference to the communications system shown in FIG. 1, the following describes a device discovery method provided in an embodiment of this application. The following mainly uses an example in which the access network device is a base station for description. A unified declaration is made herein, and details are not described in the following.

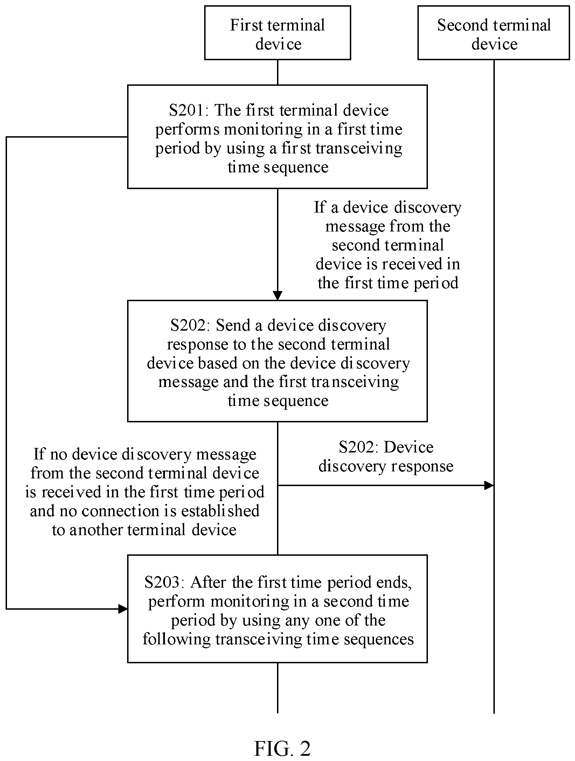

Referring to FIG. 2, the device discovery (discovery) method provided in this embodiment of this application includes the following steps.

S201: A first terminal device performs monitoring in a first time period by using a first transceiving time sequence.

In this embodiment of this application, that a terminal device performs monitoring specifically means that the terminal device performs monitoring by using a PSSCH. That a terminal device sends a device discovery message specifically means that the terminal device sends the device discovery message by using a PSSCH. That a terminal device sends a device discovery response specifically means that the terminal device sends the device discovery response by using a PSSCH. In the prior art, a dedicated PSDCH is separately allocated to a terminal device that performs device discovery, and when there are a relatively large quantity of terminal devices, channel overheads are relatively high. However, in this embodiment of this application, the terminal device performs device discovery by using the PSSCH, and there is no need to allocate a dedicated channel. Compared with the prior art, this application reduces channel overheads.

A time-frequency resource used when the first terminal device performs device discovery may be a preconfigured time-frequency resource, or may be delivered by an access network device to the first terminal device. This is not limited in this embodiment of this application. In addition, the time-frequency resource mentioned in this embodiment of this application is usually a time-frequency resource used for device discovery. This is described herein only.

The first transceiving time sequence may be a transceiving time sequence preconfigured by a vendor when the first terminal device is delivered from a factory, or may be notified by the access network device to the first terminal device, and the first transceiving time sequence is indicated to the first terminal device.

In a possible implementation, the first terminal device performs monitoring by using a physical sidelink shared channel (physical sidelink shared channel, PSSCH).

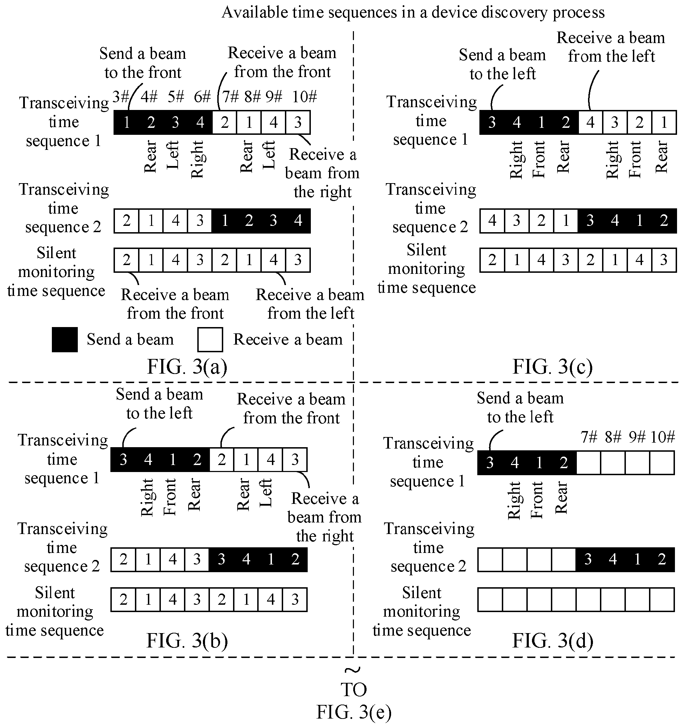

For example, referring to FIG. 3(a), the first transceiving time sequence may be any one of a transceiving time sequence 1, a transceiving time sequence 2, and a silent monitoring time sequence. The transceiving time sequence 1 is opposite to the transceiving time sequence 2. To be specific, a sending moment in the transceiving time sequence 1 is a receiving moment in the transceiving time sequence 2, and a receiving moment in the transceiving time sequence 1 is a sending moment in the transceiving time sequence 2. The silent monitoring time sequence is used by the first terminal device for continuous monitoring. In other words, when the first terminal device uses the silent monitoring time sequence, the first terminal device can monitor another terminal device.

It should be noted that the silent monitoring time sequence is merely an example name, and may also be another name. This is not limited in this embodiment of this application.

In this embodiment of this application, the transceiving time sequence includes a rule of receiving a beam or a rule of sending a beam, for example, indicates a specific slot or a specific subframe in which a beam is received or sent, and includes a direction of receiving a beam or a direction of sending a beam. FIG. 3(a) is used as an example. A black block indicates to send a beam, and a white block indicates to receive a beam. In this embodiment of this application, a beam usually refers to a millimeter-wave beam. A terminal device transmits a device discovery message, a device discovery response, or the like by receiving or sending a millimeter-wave beam. This is stated herein only. In FIG. 3(a), numbers "1", "2", "3", and "4" indicate directions of millimeter-wave beams.

In this embodiment of this application, a device discovery message, a device discovery response, or the like may be transmitted by using a millimeter-wave beam. In one aspect, because a millimeter-wave beam may be directionally transmitted, a device discovery message, a device discovery response, or the like is related to a direction. A receiver may learn of a sending direction of a millimeter-wave beam based on the received millimeter-wave beam, to learn of a location relationship between a sender and the receiver. For example, the receiver is located in front of, behind, on the left side, or on the right side of the sender. In another aspect, compared with omnidirectionally receiving and sending beams in LTE, directions of different beams can be distinguished in this embodiment of this application, so that beams in different directions are spatially isolated and do not interfere with each other.

For example, time-frequency resources for device discovery are subframes 3# to 10#. In FIG. 3(a), the transceiving time sequence 1 indicates that in the subframe 3# (corresponding to the black block 1 in the transceiving time sequence 1), a beam is sent to a front terminal device (for example, a vehicle travels in a forward direction, and this is not limited); in the subframe 4# (corresponding to the black block 2 in the transceiving time sequence 1), a beam is sent to a rear terminal device; in the subframe 5# (corresponding to the black block 3 in the transceiving time sequence 1), a beam is sent to a left terminal device; in the subframe 6# (corresponding to the black block 4 in the transceiving time sequence 1), a beam is sent to a right terminal device; in the subframe 7# (corresponding to the white block 2 in the transceiving time sequence 1), a beam is received from a front terminal device; in the subframe 8# (corresponding to the white block 1 in the transceiving time sequence 1), a beam is received from a rear terminal device; in the subframe 9# (corresponding to the white block 3 in the transceiving time sequence 1), a beam is received from a left terminal device; and in the subframe 10# (corresponding to the white block 4 in the transceiving time sequence 1), a beam is received from a right terminal device.

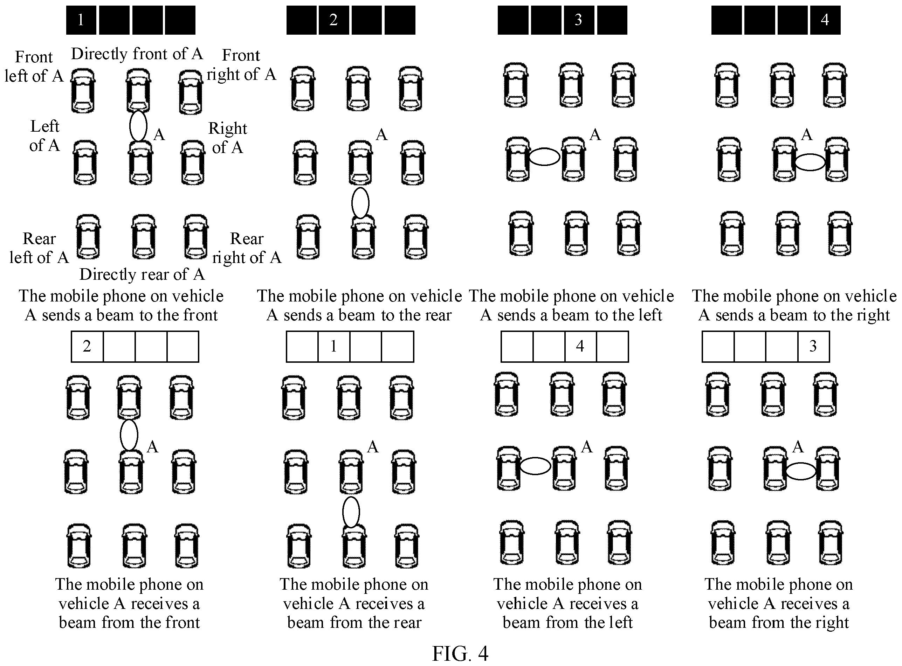

For ease of understanding, the transceiving time sequence 1 is described below with reference to a specific application scenario. Specifically, with reference to FIG. 3(a) and referring to FIG. 4, in FIG. 4, an example in which a mobile phone in a vehicle A is the first terminal device is used. When there is a communication requirement, the first terminal device may send beams in one or more directions, and receive beams from another terminal device in one or more directions. FIG. 4 shows cases in which the first terminal device sends beams in four directions and receives beams in four directions. During beam sending, the number" 1" in the block of the transceiving time sequence 1 represents sending a beam to the front, the number "2" represents sending a beam to the rear, the number "3" represents sending a beam to the left, and the number "4" represents sending a beam to the right. Correspondingly, during beam receiving, the number "1" in the block of the transceiving time sequence 1 represents receiving a beam from the rear, the number "2" represents receiving a beam from the front, the number "3" represents receiving a beam from the right, and the number "4" represents receiving a beam from the left.

It should be noted that the foregoing uses an example in which receiving or sending a beam by the terminal device occupies one subframe. Certainly, a received or sent millimeter-wave beam may alternatively occupy another quantity of subframes. For example, one millimeter-wave beam occupies two subframes. A quantity of subframes occupied by one beam is not limited in this embodiment of this application.

It should be further noted that the foregoing uses an example in which the terminal device sends beams in four directions, and the terminal device receives beams in four directions. Certainly, the terminal device may alternatively send beams in only one or more of the four directions or receive beams in only one or more other directions based on a communication requirement. For example, the terminal device sends the beam to the front terminal device in the subframe 3#, to establish a communication connection to the front terminal device, sends the beam to the left terminal device in the subframe 5#, to establish a communication connection to the left terminal device, and receives the beam of the front terminal device in the subframe 7#, and so on.

Similar to the transceiving time sequence 1 in FIG. 3(a), the transceiving time sequence 2 in FIG. 3(a) indicates that in the subframe 3# (corresponding to the white block 2 in the transceiving time sequence 2), a beam is received from a front terminal device; in the subframe 4# (corresponding to the white block 1 in the transceiving time sequence 2), a beam is received from a rear terminal device; in the subframe 5# (corresponding to the white block 3 in the transceiving time sequence 2), a beam is received from a left terminal device; in the subframe 6# (corresponding to the white block 4 in the transceiving time sequence 2), a beam is received from a right terminal device; in the subframe 7# (corresponding to the black block 1 in the transceiving time sequence 2), a beam is sent to a front terminal device; in the subframe 8# (corresponding to the black block 2 in the transceiving time sequence 2), a beam is sent to a rear terminal device; in the subframe 9# (corresponding to the black block 3 in the transceiving time sequence 2), a beam is sent to a left terminal device; and in the subframe 10# (corresponding to the black block 4 in the transceiving time sequence 2), a beam is sent to a right terminal device.

Similarly, the silent monitoring time sequence in FIG. 3(a) indicates that in the subframe 3# (corresponding to the white block 2 in the silent monitoring time sequence), a beam is received from a front terminal device; in the subframe 4# (corresponding to the white block 1 in the silent monitoring time sequence), a beam is received from a rear terminal device; in the subframe 5# (corresponding to the white block 3 in the silent monitoring time sequence), a beam is received from a left terminal device; in the subframe 6# (corresponding to the white block 4 in the silent monitoring time sequence), a beam is received from a right terminal device; in the subframe 7#, a beam is received from a front terminal device; in the subframe 8#, a beam is received from a rear terminal device; in the subframe 9#, a beam is received from a left terminal device; and in the subframe 10#, a beam is received from a right terminal device.

It should be noted that, in actual application, because there are a relatively large quantity of terminal devices, and the terminal devices perform device discovery at different moments, transceiving time sequences of the terminal devices are probably not synchronized. Consequently, the terminal devices cannot detect each other's device discovery messages. The silent monitoring time sequence is set, so that the terminal device may first switch to the silent monitoring time sequence, to increase a monitoring time of the terminal device, thereby increasing a probability that the terminal device successfully performs detection, and further increasing a probability that the terminal device successfully discovers another terminal device.

For example, a transceiving time sequence that may be used by the terminal may alternatively be any transceiving time sequence in FIG. 3(b), or may be any transceiving time sequence in FIG. 3(c). Alternatively, the terminal may use other feasible transceiving time sequences, which are not listed one by one in this embodiment of this application.

The foregoing mainly uses an example in which the terminal device performs directional receiving. In some other embodiments, the terminal device may alternatively receive beams non-directionally. Referring to FIG. 3(d), a beam receiving occasion corresponding to a white block is not marked with a number, that is, a specific direction and a specific beam receiving occasion for receiving a beam are not specified. For example, in the subframe 7#, a beam may be received from the front, or may be received from the rear, or may be received from another direction.

In FIG. 3(a) to FIG. 3(d), the terminal device may send or receive beams in a continuous time period. For example, in the transceiving time sequence 1 in FIG. 3(a), the terminal device may send beams in the subframes 3# to 6#. This reduces a latency caused by switching between receiving and sending directions.

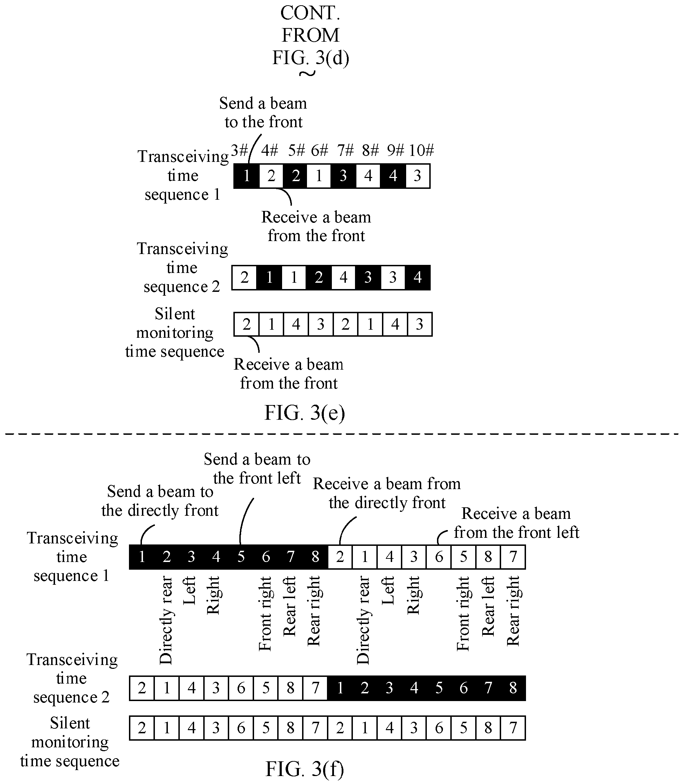

When a low latency is not considered, any transceiving time sequence in FIG. 3(e) may be used by the terminal device. For example, the terminal device sends a beam to the front in the subframe 3#, then switches from a sending direction to a receiving direction, and receives a beam from the front in the subframe 4#.

In some other embodiments, referring to FIG. 4, a transceiving time sequence may further indicate eight directions for sending or receiving beams, which are respectively the front left, the directly front, the front right, the left, the right, the rear left, the directly rear, and the rear right. Refer to FIG. 3(f) for specific implementation of the transceiving time sequence 1, the transceiving time sequence 2, and the silent monitoring time sequence. For a meaning represented by each block, refer to the foregoing description. Details are not described herein again.

In a possible manner, compared with the eight beam directions indicated by the transceiving time sequence, in the four beam directions indicated by the foregoing transceiving time sequence, the front may refer to only the directly front, and the rear may refer to only the directly rear. In another possible implementation, the front in the four directions may refer to the directly front and an obliquely front, and the rear in the four directions may refer to the directly rear and an obliquely rear.

The foregoing mainly uses an example in which the transceiving time sequence indicates four or eight directions for description. Certainly, a specific quantity of beam directions indicated by the transceiving time sequence may be separately set. This is not limited in this embodiment of this application.

S202: If the first terminal device receives a device discovery message from a second terminal device in the first time period, the first terminal device sends a device discovery response to the second terminal device based on the device discovery message and the first transceiving time sequence.

Correspondingly, the second terminal device receives the device discovery response from the first terminal device.

In a possible implementation, the first terminal device sends the device discovery response to the second terminal device by using a PSSCH.

It is easily understood that, if the first terminal device can detect the device discovery message from the second terminal device by using the PSSCH, it indicates that the time sequence of the first terminal device is synchronized with a time sequence of the second terminal device. In this case, the first terminal device and the second terminal device do not need to adjust the transceiving time sequences, the first terminal device continues to send the device discovery response to the second terminal device by using the first transceiving time sequence, so as to subsequently establish a communication connection between the first terminal device and the second terminal device. For example, if the first transceiving time sequence is the transceiving time sequence 1 in FIG. 3(a), after the first terminal device detects the device discovery message from the second terminal device by using the PSSCH, the first terminal device continues to use the transceiving time sequence 1 to perform device discovery with the second terminal device. Specifically, the first terminal device sends the device discovery response to the second terminal device on a beam sending occasion in the transceiving time sequence 1, for example, in the subframe 3#, the subframe 4#, the subframe 5#, or the subframe 6#.

Optionally, the device discovery message includes a terminal identifier. For example, the device discovery message from the second terminal device includes an identifier (an international mobile subscriber identity (international mobile subscriber identification number, IMSI), an international mobile equipment identity (international mobile equipment identity, IMEI), or the like) of the second terminal device.

Optionally, the device discovery message explicitly includes a beam identifier. The beam identifier is used to indicate a sending direction of the device discovery message. The sending direction includes but is not limited to the front, the rear, the left, and the right. For example, the beam identifier may be 0 (00 in binary), 1 (01 in binary), 2 (10 in binary), or 3 (11), where 00 represents the front, 01 represents the rear, 10 represents the left, and 11 represents the right. In this way, after detecting the device discovery message from the second terminal device, the first terminal device may obtain a location of the second terminal device based on the beam identifier. For example, referring to FIG. 4, the first terminal device is the mobile phone in the vehicle A, and the second terminal device is a mobile phone in a vehicle behind the vehicle A. If the beam identifier 00 indicates that a beam is sent to the front, after the first terminal device detects the device discovery message from the second terminal device, the first terminal device may learn, based on the beam identifier 00, that the second terminal device is located behind the first terminal device. Certainly, a specific sending direction indicated by a specific beam identifier may be flexibly set based on an actual application scenario. This is not limited in this embodiment of this application.

Certainly, the device discovery message may implicitly indicate a sending direction of the device discovery message. In a possible implementation, because a transceiving time sequence includes a rule of receiving a beam or a rule of sending a beam, for example, indicates a slot or a subframe in which a beam is sent or received, and includes a direction of receiving a beam or a direction of sending a beam, the first terminal device may learn of a sending direction of a device discovery message based on an occasion of receiving the device discovery message. FIG. 4 is still used as an example. The first terminal device (the mobile phone in the vehicle A) performs monitoring by using the transceiving time sequence 1 shown in FIG. 3(a), and detects, in the subframe 8#, a device discovery message from the second terminal device. In this case, based on the transceiving time sequence 1 shown in FIG. 3(a), the device discovery message detected in the subframe 8# is received from the rear, and it indicates that the second terminal device is behind the first terminal device.

In this way, S202 may be specifically implemented as follows: The first terminal device sends the device discovery response based on the first transceiving time sequence and the sending direction of the device discovery message from the second terminal device. For example, if the first transceiving time sequence is the transceiving time sequence 1, and the device discovery message of the second terminal device is from the front of the first terminal device, the first terminal device feeds back the device discovery response to the front second terminal device by using the transceiving time sequence 1.

Optionally, the device discovery message from the second terminal device includes an identifier of a transceiving time sequence of the second terminal device. For example, according to preconfiguration, an identifier of the transceiving time sequence 1 shown in FIG. 3(a) is 0 (00 in binary), an identifier of the transceiving time sequence 2 is 1 (01 in binary), and an identifier of the silent monitoring time sequence is 2 (10 in binary). If the second terminal device uses the transceiving time sequence 2, the device discovery message from the second terminal device includes the identifier 10 of the transceiving time sequence.

Optionally, the device discovery message from the second terminal device includes a first connection identifier, and the first connection identifier is used to indicate whether the device discovery message is sent by the second terminal device to the first terminal device after the second terminal device detects a device discovery message from the first terminal device. For example, the first connection identifier is 0 or 1.

That the first connection identifier is 0 indicates that the device discovery message is not sent by the second terminal device to the first terminal device after the second terminal device detects the device discovery message from the first terminal device. In other words, the second terminal device actively sends the device discovery message to the first terminal device when the second terminal device does not detect the device discovery message from the first terminal device, and the device discovery message includes the first connection identifier 0, to establish a communication connection to the first terminal device. In this case, after receiving the device discovery message whose first connection identifier is 0, the first terminal device feeds back the device discovery response to the second terminal device. The device discovery response sent by the first terminal device includes a second connection identifier 1, and the second connection identifier 1 is used to indicate that the first terminal device has detected the device discovery message from the second terminal device. Subsequently, after receiving the device discovery response whose second connection identifier is 1, the second terminal device may feed back a communication connection establishment indication to the first terminal device, to indicate to establish a communication connection between the first terminal device and the second terminal device.

That the first connection identifier is 1 indicates that the device discovery message is sent by the second terminal device to the first terminal device after the second terminal device detects the device discovery message from the first terminal device. In other words, the first terminal device first sends the device discovery message to the second terminal device, and the device discovery message sent by the first terminal device includes a second connection identifier 0. The second terminal device feeds back the device discovery message to the first terminal device when detecting the device discovery message from the first terminal device, where the device discovery message fed back by the second terminal device includes the first connection identifier 1. In this case, after detecting the device discovery message whose first connection identifier is 1, the first terminal device sends the device discovery response to the second terminal device, where the device discovery response is used to indicate to establish a connection between the first terminal device and the second terminal device.

S203: If the first terminal device does not receive a device discovery message from the second terminal device in the first time period, and the first terminal device does not establish a connection to another terminal device in the first time period, after the first time period ends, the first terminal device performs monitoring in a second time period by using any one of the following transceiving time sequences:
the transceiving time sequence 1, the transceiving time sequence 2, and the silent monitoring time sequence, where the transceiving time sequence 2 is opposite to the transceiving time sequence 1, and the silent monitoring time sequence is used by the first terminal device for continuous monitoring.

In a possible implementation, a timer (timer) is set on the terminal device, and timing duration of the timer may be set to the first time period. The terminal device performs monitoring by using a specific transceiving time sequence. If the terminal device does not detect a device discovery message from another terminal device when the timer expires, and the terminal device does not establish a communication connection to another terminal device, it indicates that the transceiving time sequence used by the terminal device may be unsuitable for the terminal device. In this case, the terminal device switches the transceiving time sequence when the timer expires. For example, the terminal device performs monitoring by using the transceiving time sequence 1 shown in FIG. 3(a). When the timer expires, that is, in the first time period, if the terminal device does not detect a device discovery message of another terminal device, and if the terminal device has no communication connection to another terminal device after the first time period ends, the terminal device randomly selects a transceiving time sequence from the transceiving time sequences shown in FIG. 3(a), for example, still selects the transceiving time sequence 1 for monitoring, or selects the transceiving time sequence 2 for monitoring. Subsequently, in the second time period, the terminal device performs monitoring by using the selected transceiving time sequence.

Optionally, the timing duration (that is, the first time period) of the timer may be an integer multiple of duration corresponding to a transceiving time sequence. Using the transceiving time sequence 1 in FIG. 3(a) as an example, the timing duration of the timer may be duration from the subframe 3# to the subframe 10#, that is, every eight subframes are one monitoring period. If the terminal device does not detect a device discovery message or a device discovery response from another terminal device in one monitoring period (eight subframes), the terminal device performs monitoring in eight subframes of a next monitoring period by using an adjusted transceiving time sequence. For another example, the duration of the timer may be twice the duration from the subframe 3# to the subframe 10#. A length of the timing duration of the timer is not limited in this embodiment of this application.

According to the device discovery method provided in this embodiment of this application, when the first terminal device can detect the device discovery message from the second terminal device, it indicates that time sequences of the first terminal device and the second terminal device are synchronized, there is no need to adjust the transceiving time sequences of the first terminal device and the second terminal device, and the first terminal device may continue to send the device discovery response to the second terminal device by using the first transceiving time sequence. When the first terminal device does not detect the device discovery message from the second terminal device in the first time period, and the first terminal device is not connected to another terminal device, it indicates that the transceiving time sequence of the first terminal device is not applicable to a current communication requirement, the first terminal device may randomly select a transceiving time sequence from a plurality of available transceiving time sequences for monitoring, to improve a success rate of detection, thereby improving a success rate of device discovery, and meeting a communication requirement of a future terminal device.

The following describes, with reference to different scenarios, the device discovery method provided in this embodiment of this application.

### Scenario 1

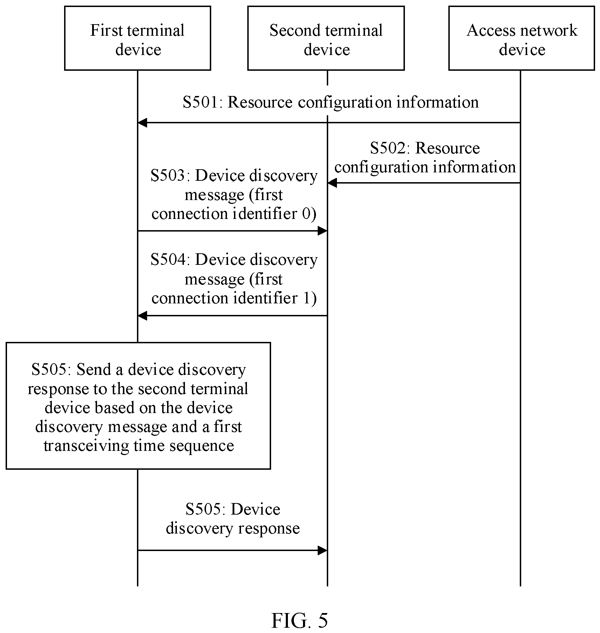

Referring to FIG. 5, an example in which coverage by a base station exists, the first terminal device first sends a device discovery message to the second terminal device, the first terminal device performs monitoring by using the first transceiving time sequence in a time period, and the time sequence of the first terminal device is synchronized with that of the second terminal device is used. The device discovery method provided in this embodiment of this application may specifically include the following steps.

S501: The access network device sends resource configuration information to the first terminal device.

Correspondingly, the first terminal device receives the resource configuration information from the access network device.

Optionally, the access network device sends a broadcast message. The broadcast message carries the resource configuration information. A terminal device served by the access network device may learn, from the resource configuration information in the broadcast message, of a resource that can be used by the terminal device. The broadcast message is, for example, but is not limited to, a system information block (System Information Block, SIB). The resource configuration information is used to indicate a time-frequency resource available for the first terminal device and/or indicate a transceiving time sequence available for the first terminal device. For example, the resource configuration information is used to indicate the time-frequency resource available for the first terminal device. In this case, the transceiving time sequence available for the first terminal device may be a preconfigured transceiving time sequence. The time-frequency resource includes a time domain resource and a frequency domain resource. Alternatively, the resource configuration information is used to indicate the transceiving time sequence available for the first terminal device. In this case, the time-frequency resource available for the first terminal device may be a preconfigured time-frequency resource. Alternatively, the resource configuration information is used to indicate the time-frequency resource available for the first terminal device and the transceiving time sequence available for the first terminal device. Certainly, the access network device may indicate the available time-frequency resource and transceiving time sequence to the terminal device by using one SIB, or the access network device may respectively indicate the available time-frequency resource and transceiving time sequence to the terminal device by using two SIBs.

Optionally, the first terminal device sends a resource request to the access network device, where the resource request is used to request the time-frequency resource available for the first terminal device and/or request the transceiving time sequence available for the first terminal device.

In a possible implementation, the time-frequency resource available for the first terminal device includes a millimeter-wave band frequency domain resource. This means that the first terminal device may perform device-to-device (device-to-device, D2D) or V2X communication, or direct communication between devices of another form by receiving and sending millimeter-wave beams. For example, the first terminal device may perform device discovery by receiving and sending millimeter-wave beams, to discover another terminal device, or to be discovered by another device.

Optionally, the access network device may indicate the available transceiving time sequence to the first terminal device in the following two manners.

Manner 1: The access network device sends at least one available transceiving time sequence to the first terminal device. Optionally, the available transceiving time sequence is any one of the following transceiving time sequences: the transceiving time sequence 1, the transceiving time sequence 2, and the silent monitoring time sequence. For example, the available transceiving time sequence is any one of the transceiving time sequence 1, the transceiving time sequence 2, and the silent monitoring time sequence in FIG. 3(a). For another example, the available transceiving time sequence is any one of a transceiving time sequence 1, a transceiving time sequence 2, and a silent monitoring time sequence in FIG. 3(b). For another example, the available transceiving time sequence is any transceiving time sequence in FIG. 3(f), or other feasible transceiving time sequences, which are not listed one by one in this embodiment of this application.

Manner 2: The terminal device and the access network device are preconfigured with transceiving time sequences and identifiers corresponding to the transceiving time sequences. In this way, the access network device sends an identifier of at least one transceiving time sequence to the first terminal device, and then the first terminal device may determine, based on the identifier of the transceiving time sequence, a transceiving time sequence used by the first terminal device. For example, according to the preconfigured transceiving time sequence and identifiers, an identifier of the transceiving time sequence 1 shown in FIG. 3(a) is 0 (00 in binary), an identifier of the transceiving time sequence 2 is 1 (01 in binary), and an identifier of the silent monitoring time sequence is 2 (10 in binary). The access network device sends 00 (corresponding to the transceiving time sequence 1) to the first terminal device, and the first terminal device determines, according to a preconfigured policy or the like, to use the transceiving time sequence 2 for monitoring; or the first terminal device determines, according to a preconfigured policy, to use the transceiving time sequence 1 for monitoring; or the first terminal device determines, according to a preconfigured policy, to use the silent monitoring time sequence for monitoring. In a possible implementation, the preconfigured policy in the first terminal device may be preconfigured by a device vendor before delivery. In another example, the access network device may further send 00 (corresponding to the transceiving time sequence 1) and 01 (corresponding to the transceiving time sequence 2) to the first terminal device, and the first terminal device determines a transceiving time sequence to be used. For example, the first terminal device determines to use the transceiving time sequence 2 for monitoring.

Certainly, the identifiers of the transceiving time sequences 1 and 2, and the silent monitoring time sequence may be other identifiers. For example, the identifier of the transceiving time sequence 1 is 1 (01 in binary), the identifier of the transceiving time sequence 2 is 2 (10 in binary), and the identifier of the silent monitoring time sequence is 3 (11 in binary). An identifier of each transceiving time sequence is not limited in this embodiment of this application.

Optionally, the access network device may further send information in another form to the terminal device, to indicate the transceiving time sequence available for the terminal device. For example, the access network device sends information in a table form, to indicate the transceiving time sequence. A manner of indicating the transceiving time sequence is not limited in this embodiment of this application.

S502: The access network device sends resource configuration information to the second terminal device.

Correspondingly, the second terminal device receives the resource configuration information from the access network device.

Optionally, the access network device sends a broadcast message, where the broadcast message carries the resource configuration information. The resource configuration information is used to indicate a time-frequency resource available for the second terminal device, or is used to indicate a transceiving time sequence available for the second terminal device, or is used to indicate a time-frequency resource available for the second terminal device and a transceiving time sequence available for the second terminal device.

Optionally, the second terminal device sends a resource request to the access network device, where the resource request is used to request the time-frequency resource available for the second terminal device and/or request the transceiving time sequence available for the second terminal device.

In a possible implementation, the time-frequency resource available for the second terminal device includes a millimeter-wave band frequency domain resource.

Optionally, the transceiving time sequence available for the second terminal device may be the transceiving time sequence 1, the transceiving time sequence 2, or the silent monitoring time sequence.

Specifically, for an implementation procedure of S502, refer to S501. Details are not described herein again.

It should be noted that, in this embodiment of this application, an execution sequence of S501 and S502 is not limited. To be specific, the access network device may first send the resource configuration information to the first terminal device, and then send the resource configuration information to the second terminal device; or first send the resource configuration information to the second terminal device, and then send the resource configuration information to the first terminal device; or the access network device simultaneously performs S501 and S502. Correspondingly, a sequence in which the first terminal device and the second terminal device receive the resource configuration information from the access network device may also include at least three cases.

S503: The first terminal device sends a device discovery message to the second terminal device by using the first transceiving time sequence.

Correspondingly, the second terminal device receives the device discovery message from the first terminal device.

In a possible implementation, the first terminal device sends the device discovery message to the second terminal device by using a PSSCH.

The first transceiving time sequence is either of the foregoing transceiving time sequence 1 and the transceiving time sequence 2. For example, referring to FIG. 3(a), the first terminal device sends, in the subframe 3#, the device discovery message to the second terminal device in front of the first terminal device by using the transceiving time sequence 1.

The device discovery message sent by the first terminal device carries a second connection identifier 0, which is used to indicate that the device discovery message is a message actively sent by the first terminal device.

Optionally, the device discovery message sent by the first terminal device carries a beam identifier 00, and the beam identifier 00 indicates that the device discovery message is sent forward.

Optionally, the device discovery message sent by the first terminal device carries an identifier of the first terminal device.

Optionally, the device discovery message sent by the first terminal device carries the transceiving time sequence of the first terminal device, or carries an identifier of the transceiving time sequence of the first terminal device.

S504: The second terminal device sends a device discovery message to the first terminal device.

Correspondingly, the first terminal device receives the device discovery message from the second terminal device.

In a possible implementation, the second terminal device sends the device discovery message to the first terminal device by using a PSSCH.

Optionally, the second terminal device learns of a sending direction of the device discovery message of the first terminal device based on the beam identifier in the device discovery message from the first terminal device.

Optionally, the second terminal device learns of the transceiving time sequence of the first terminal device based on the device discovery message from the first terminal device.

The second terminal device learns, based on the second connection identifier 0 in the device discovery message from the first terminal device, that the device discovery message is actively sent by the first terminal device and is used to request to discover the second terminal device. In this case, the second terminal device sends the device discovery message to the first terminal device, where the device discovery message sent by the second terminal device carries a first connection identifier 1, which is used to indicate that the device discovery message is not actively sent by the second terminal device, but sent by the second terminal device to the first terminal device after the second terminal device detects the device discovery message from the first terminal device.

Optionally, the device discovery message sent by the second terminal device carries a beam identifier.

Optionally, the device discovery message sent by the second terminal device carries an identifier of the second terminal device.

Optionally, the device discovery message sent by the second terminal device carries a transceiving time sequence of the second terminal device, or carries an identifier of a transceiving time sequence of the second terminal device.

S505: The first terminal device sends a device discovery response to the second terminal device based on the device discovery message from the second terminal device and the first transceiving time sequence.

Correspondingly, the second terminal device receives the device discovery response from the first terminal device. The device discovery response is used to indicate to establish a communication connection between the first terminal device and the second terminal device.

In a possible implementation, the first terminal device sends the device discovery response to the second terminal device by using a PSSCH.

In a possible implementation, the first terminal device learns, based on the device discovery message that is from the second terminal device and that carries the first connection identifier 1, that the second terminal device has detected the device discovery message of the first terminal device, and the first terminal device has detected the device discovery message of the second terminal device. In this way, the first terminal device may feed back the device discovery response to the second terminal device, to indicate to establish the communication connection between the first terminal device and the second terminal device.

Optionally, for example, the device discovery message from the second terminal device carries the beam identifier 00, and the beam identifier 00 indicates that the device discovery message is sent forward. The first terminal device learns, based on the beam identifier 00, that the second terminal device is located behind the first terminal device.

### Scenario 2

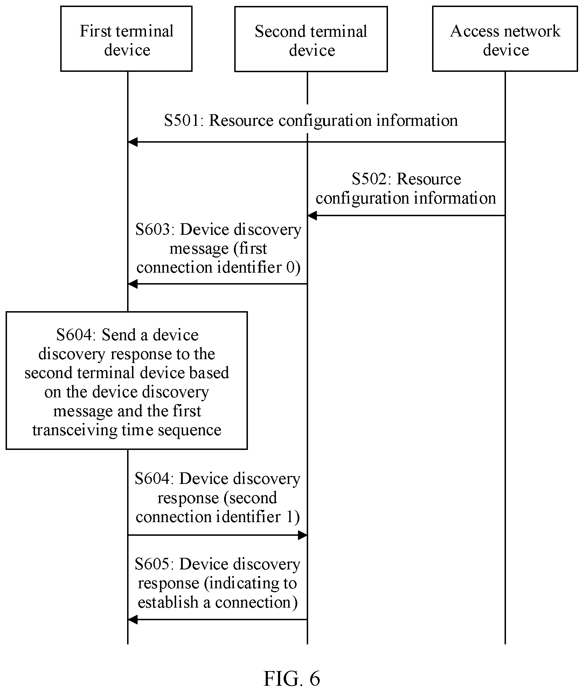

Referring to FIG. 6, an example in which coverage by a base station exists, the second terminal device first sends a device discovery message to the first terminal device, time sequences of the first terminal device and the second terminal device are synchronized in a time period, and the first terminal device performs monitoring by using the first transceiving time sequence is used. The device discovery method provided in this embodiment of this application may specifically include the following steps.

S501: The access network device sends resource configuration information to the first terminal device.

Correspondingly, the first terminal device receives the resource configuration information from the access network device.

S502: The access network device sends resource configuration information to the second terminal device.

Correspondingly, the second terminal device receives the resource configuration information from the access network device.

S603: The second terminal device sends a device discovery message to the first terminal device.

Correspondingly, the first terminal device receives the device discovery message from the second terminal device.

In a possible implementation, the second terminal device sends the device discovery message to the first terminal device by using a PSSCH.

The device discovery message sent by the second terminal device carries a first connection identifier 0, which is used to indicate that the device discovery message is a message actively sent by the second terminal device.

Optionally, the device discovery message sent by the second terminal device carries an identifier of the second terminal device.

Optionally, the device discovery message sent by the second terminal device carries a transceiving time sequence of the second terminal device, or an identifier of a transceiving time sequence of the second terminal device.

Optionally, the device discovery message sent by the second terminal device carries a beam identifier.

S604: The first terminal device sends a device discovery response to the second terminal device based on the device discovery message from the second terminal device and the first transceiving time sequence.

Correspondingly, the second terminal device receives the device discovery response from the first terminal device.

In a possible implementation, the first terminal device sends the device discovery response to the second terminal device by using a PSSCH.

Optionally, the first terminal device learns of a sending direction of the device discovery message based on the beam identifier in the device discovery message from the second terminal device.

The first terminal device learns, based on the first connection identifier 0 in the device discovery message from the second terminal device, that the device discovery message is actively sent by the second terminal device. In this case, the first terminal device sends the device discovery response to the second terminal device. The device discovery response sent by the first terminal device carries a second connection identifier 1, and the second connection identifier 1 is used to indicate that the first terminal device has detected the device discovery message from the second terminal device.

Optionally, the device discovery response sent by the first terminal device carries an identifier of the first terminal device.

Optionally, the device discovery response sent by the first terminal device carries the transceiving time sequence of the first terminal device, or carries an identifier of the transceiving time sequence of the first terminal device.

Optionally, the device discovery response sent by the first terminal device carries a beam identifier that is used to indicate a sending direction of the device discovery response.

S605: The second terminal device sends a device discovery response to the first terminal device.

Correspondingly, the first terminal device receives the device discovery response from the second terminal device. The device discovery response is used to indicate to establish a communication connection between the first terminal device and the second terminal device.

In a possible implementation, the second terminal device sends the device discovery response to the first terminal device by using a PSSCH.

Optionally, the device discovery response sent by the second terminal device carries an identifier of the second terminal device.

Optionally, the device discovery response sent by the second terminal device carries a transceiving time sequence of the second terminal device, or an identifier of a transceiving time sequence of the second terminal device.

Optionally, the device discovery response sent by the second terminal device carries a beam identifier that is used to indicate a sending direction of the device discovery response.

### Scenario 3

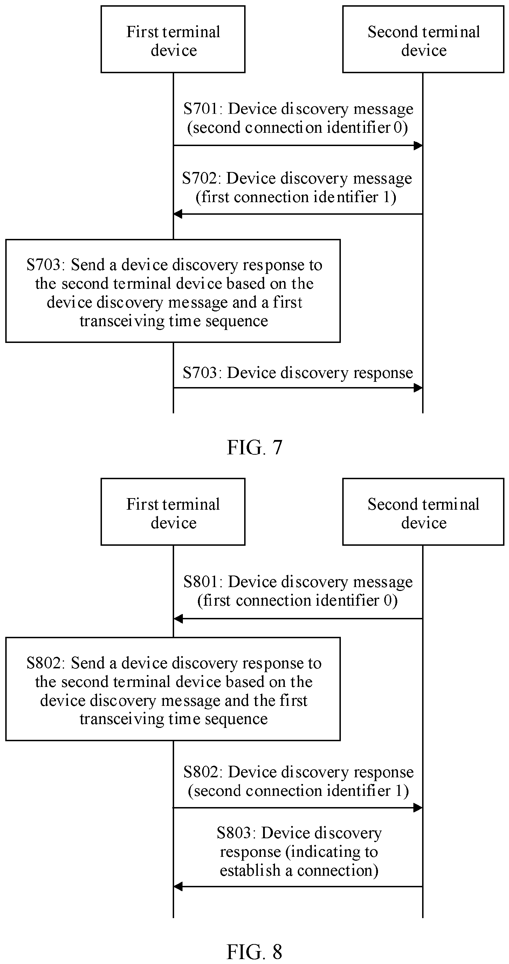

Referring to FIG. 7, an example in which there is no coverage by a base station, the first terminal device first sends a device discovery message to the second terminal device, the first terminal device performs monitoring by using the first transceiving time sequence in a time period, and the time sequence of the first terminal device is synchronized with that of the second terminal device is used. The device discovery method provided in this embodiment of this application may specifically include the following steps.

S701: The first terminal device sends a device discovery message to the second terminal device by using the first transceiving time sequence.

Correspondingly, the second terminal device receives the device discovery message from the first terminal device.

S702: The second terminal device sends a device discovery message to the first terminal device.

Correspondingly, the first terminal device receives the device discovery message from the second terminal device.

S703: The first terminal device sends a device discovery response to the second terminal device based on the device discovery message from the second terminal device and the first transceiving time sequence.

Correspondingly, the second terminal device receives the device discovery response from the first terminal device. The device discovery response is used to indicate to establish a communication connection between the first terminal device and the second terminal device.

For detailed procedures of S701 to S703, refer to S503 to S505 respectively. Details are not described herein again. Different from the method in FIG. 5, in FIG. 7, time-frequency resources available for the first terminal device and the second terminal device are preconfigured time-frequency resources in the terminal devices. The transceiving time sequence available for the terminal device is a preconfigured transceiving time sequence. Optionally, a transceiving time sequence is pre-configured as a transceiving time sequence for device discovery. When the terminal device performs device discovery, the terminal device uses the pre-configured transceiving time sequence for monitoring. In this way, the terminal device does not need to select, through polling, a time sequence from a plurality of transceiving time sequences as a time sequence used for monitoring, so that power consumption of the terminal device can be reduced. For example, the transceiving time sequence 1 shown in FIG. 3(a) is preconfigured in the terminal device. Subsequently, when the terminal device needs to perform device discovery, the terminal device does not need to select one of a plurality of transceiving time sequences through polling, but directly uses the transceiving time sequence 1 to perform device discovery, so that power consumption of the terminal can be reduced. Subsequently, if the terminal device does not detect a device discovery message from another terminal device within a monitoring period, and the terminal device is not connected to another terminal device, the terminal device may adjust the transceiving time sequence based on the transceiving time sequence 1. It can be learned that a transceiving time sequence is preconfigured in the terminal device, and subsequently, the terminal device may adjust the transceiving time sequence based on the preconfigured transceiving time sequence, so that a subsequent device discovery need of the terminal device can be met.

Alternatively, a transceiving time sequence may be preconfigured, and when the terminal device performs device discovery, an opposite time sequence of the preconfigured transceiving time sequence is directly used for monitoring. This can also avoid selecting, through polling, a time sequence from a plurality of transceiving time sequences as a time sequence used for monitoring, thereby reducing power consumption of the terminal device. Certainly, there may be other preconfiguration manners, which are not listed one by one herein. In addition, a quantity of transceiving time sequences preconfigured in the terminal device is not limited in this embodiment of this application. For example, two transceiving time sequences may be preconfigured in the terminal device.

### Scenario 4

Referring to FIG. 8, an example in which there is no coverage by a base station, the second terminal device first sends a device discovery message to the first terminal device, time sequences of the first terminal device and the second terminal device are synchronized in a time period, and the first terminal device performs monitoring by using the first transceiving time sequence is used. The device discovery method provided in this embodiment of this application may specifically include the following steps.

S801: The second terminal device sends a device discovery message to the first terminal device.

Correspondingly, the first terminal device receives the device discovery message from the second terminal device.

The device discovery message sent by the second terminal device carries a first connection identifier 0, which is used to indicate that the device discovery message is a message actively sent by the second terminal device.

S802: The first terminal device sends a device discovery response to the second terminal device based on the device discovery message from the second terminal device and the first transceiving time sequence.

Correspondingly, the second terminal device receives the device discovery response from the first terminal device.

The device discovery response sent by the first terminal device carries a second connection identifier 1, and the second connection identifier 1 is used to indicate that the first terminal device has detected the device discovery message from the second terminal device.

S803: The second terminal device sends a device discovery response to the first terminal device.

Correspondingly, the first terminal device receives the device discovery response from the second terminal device. The device discovery response is used to indicate to establish a communication connection between the first terminal device and the second terminal device.

For detailed procedures of S801 to S803, refer to S603 to S605 respectively. Details are not described herein again. Different from the method shown in FIG. 6, in the method shown in FIG. 8, a time-frequency resource available for the terminal device is a preconfigured time-frequency resource, and a transceiving time sequence available for the terminal device is a preconfigured transceiving time sequence.

### Scenario 5

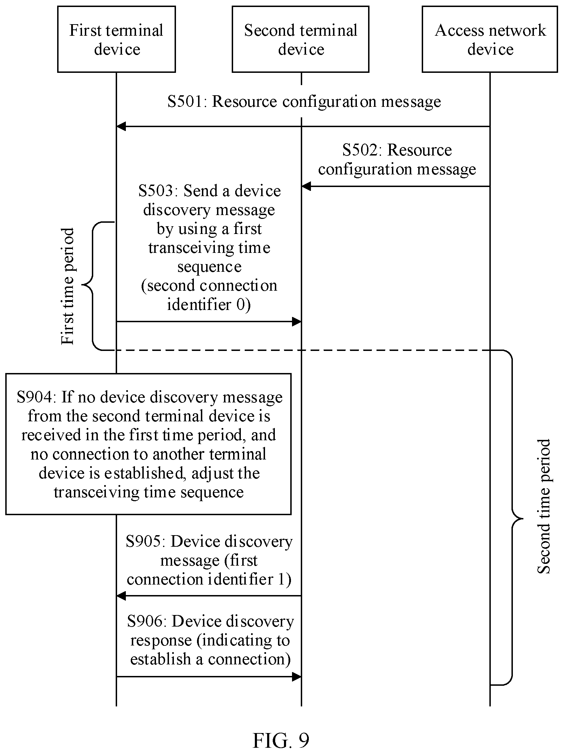

Referring to FIG. 9, an example in which coverage by a base station exists, the first terminal device first sends a device discovery message to the second terminal device, the first terminal device performs monitoring by using the first transceiving time sequence in a time period, and time sequences of the first terminal device and the second terminal device are not synchronized is used. The device discovery method provided in this embodiment of this application may specifically include the following steps.

S501: The access network device sends resource configuration information to the first terminal device.

Correspondingly, the first terminal device receives the resource configuration information from the access network device.

S502: The access network device sends resource configuration information to the second terminal device.

Correspondingly, the second terminal device receives the resource configuration information from the access network device.

S503: The first terminal device sends a device discovery message to the second terminal device in the first time period by using the first transceiving time sequence.

S904: If the first terminal device does not receive a device discovery message from the second terminal device in the first time period, and the first terminal device does not establish a connection to another terminal device, the first terminal device adjusts the transceiving time sequence.

Specifically, after the first time period ends, the first terminal device performs monitoring in a second time period by using any one of the following transceiving time sequences: the transceiving time sequence 1, the transceiving time sequence 2, and the silent monitoring time sequence. The transceiving time sequence 1 is opposite to the transceiving time sequence 2. The silent monitoring time sequence is used by the first terminal device for continuous monitoring.

It is easily understood that the first terminal device may set a timer, and timing duration of the timer may be the first time period (for example, 2 ms). If the time sequence of the first terminal device is not synchronized with the time sequence of the second terminal device in the first time period, the first terminal device generally cannot receive a device discovery message from the second terminal device in the first time period. In this case, if the first terminal device does not establish a connection to another terminal device at a moment when the timer expires, the transceiving time sequence of the first terminal device needs to be adjusted, to improve a success rate of establishing a communication connection between the first terminal device and the second terminal device. In this way, after adjusting the transceiving time sequence, the first terminal device may successfully detect the device discovery message from the second terminal device. For example, the first terminal device uses the transceiving time sequence 1 in FIG. 3(a) in the first time period. If the first terminal device has not detected the device discovery message from the second terminal device when the timer expires, that is, when the first time period ends, the first terminal device adjusts the transceiving time sequence, that is, randomly selects the transceiving time sequence 2 from the three transceiving time sequences shown in FIG. 3(a), and uses the transceiving time sequence 2 for monitoring.

S905: The second terminal device sends a device discovery message to the first terminal device.

Correspondingly, the first terminal device receives the device discovery message from the second terminal device.

In this case, the device discovery message sent by the second terminal device carries a first connection identifier 1, which is used to indicate that the device discovery message is not actively sent by the second terminal device, but sent by the second terminal device to the first terminal device after the second terminal device detects the device discovery message from the first terminal device.

It may be understood that, after the first terminal device performs S904, that is, after the transceiving time sequence is adjusted, if the transceiving time sequence of the first terminal device is synchronized with the transceiving time sequence of the second terminal device, the second terminal device usually can successfully receive the device discovery message (carrying a second connection identifier 0) from the first terminal device. In this way, the second terminal device sends the device discovery message (carrying the first connection identifier 1) to the first terminal device. On the contrary, after the first terminal device performs S904, that is, after the transceiving time sequence is adjusted, if the first terminal device still does not receive the device discovery message from the second terminal device within a time period, the first terminal device may continue to adjust the transceiving time sequence, for example, randomly select one from the three transceiving time sequences in FIG. 3(a), until the first terminal device can detect the device discovery message from the second terminal device.

S906: The first terminal device sends a device discovery response to the second terminal device based on the device discovery message from the second terminal device and the adjusted transceiving time sequence.

Correspondingly, the second terminal device receives the device discovery response from the first terminal device. The device discovery response is used to indicate to establish a communication connection between the first terminal device and the second terminal device.

With reference to the foregoing example, after the timer expires, that is, after the first time period ends, the first terminal device performs monitoring in the second time period by using the randomly selected transceiving time sequence 2, that is, sends the device discovery response to the second terminal device by using the transceiving time sequence 2.

In this embodiment of this application, duration of the first time period and duration of the second time period may be the same, or may be different. Specifically, the duration may be flexibly set based on an application scenario. This is not limited herein. In addition, because there may be a latency for the first terminal device to adjust the time sequence, there may be a time interval between the first time period and the second time period. FIG. 9 shows only an example in which there is no time interval between the first time period and the second time period.

For detailed descriptions of the steps of the method shown in FIG. 9, refer to the foregoing related descriptions. Details are not described herein again.

### Scenario 6

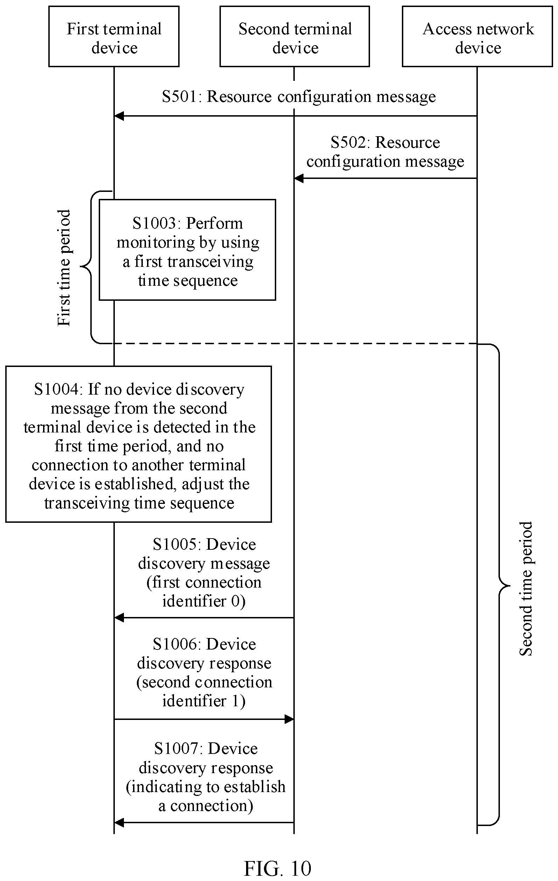

Referring to FIG. 10, an example in which coverage by a base station exists, the second terminal device first sends a device discovery message to the first terminal device, time sequences of the first terminal device and the second terminal device are not synchronized in a time period, and the first terminal device performs monitoring by using the first transceiving time sequence is used. The device discovery method provided in this embodiment of this application may specifically include the following steps.

S501: The access network device sends resource configuration information to the first terminal device.

Correspondingly, the first terminal device receives the resource configuration information from the access network device.

S502: The access network device sends resource configuration information to the second terminal device.

Correspondingly, the second terminal device receives the resource configuration information from the access network device.

S1003: The first terminal device performs monitoring by using the first transceiving time sequence.

S1004: If the first terminal device does not detect a device discovery message from the second terminal device in the first time period, and the first terminal device does not establish a connection to another terminal device, the first terminal device adjusts the transceiving time sequence.

S1005: The second terminal device sends a device discovery message to the first terminal device.

Correspondingly, the first terminal device receives the device discovery message from the second terminal device.

The device discovery message sent by the second terminal device carries a first connection identifier 0, which is used to indicate that the device discovery message is a message actively sent by the second terminal device.

S1006: The first terminal device sends a device discovery response to the second terminal device based on the device discovery message from the second terminal device and the adjusted transceiving time sequence.

Correspondingly, the second terminal device receives the device discovery response from the first terminal device. The device discovery response sent by the first terminal device carries a second connection identifier 1, and the second connection identifier 1 is used to indicate that the first terminal device has detected the device discovery message from the second terminal device.

S1007: The second terminal device sends a device discovery response to the first terminal device.

Correspondingly, the first terminal device receives the device discovery response from the second terminal device. The device discovery response is used to indicate to establish a communication connection between the first terminal device and the second terminal device.

For a detailed procedure of each step of the method in FIG. 10, refer to the foregoing related procedure.

### Scenario 7

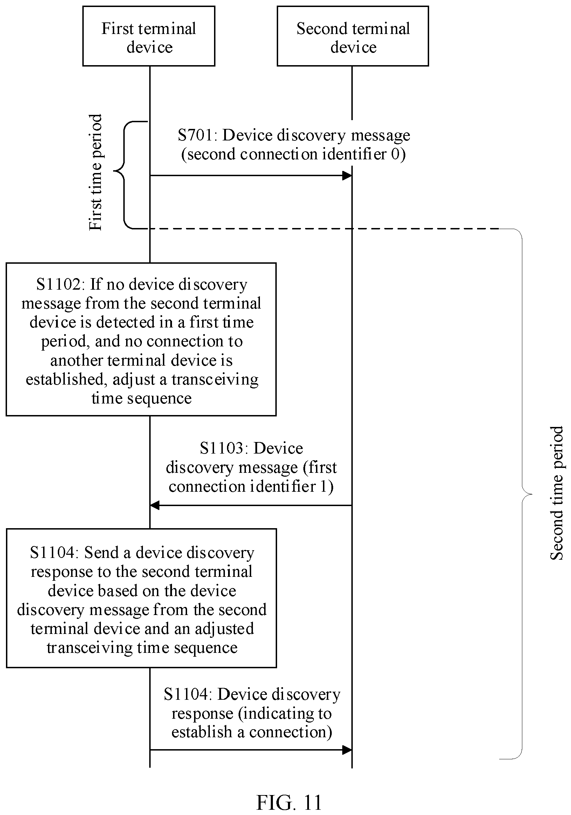

Referring to FIG. 11, an example in which there is no coverage by a base station, the first terminal device first sends a device discovery message to the second terminal device, the first terminal device performs monitoring by using the first transceiving time sequence in the first time period, and time sequences of the first terminal device and the second terminal device are not synchronized is used. The device discovery method provided in this embodiment of this application may specifically include the following steps.

S701: The first terminal device sends a device discovery message to the second terminal device by using the first transceiving time sequence.

Correspondingly, the second terminal device receives the device discovery message from the first terminal device. The device discovery message sent by the first terminal device carries a second connection identifier 0, and the second connection identifier 0 is used to indicate that the message is actively sent by the first terminal device, instead of being sent after the first terminal device detects a device discovery message from the second terminal device.

S1102: If the first terminal device does not detect a device discovery message from the second terminal device in the first time period, and the first terminal device does not establish a connection to another terminal device, the first terminal device adjusts the transceiving time sequence.

S1103: The second terminal device sends a device discovery message to the first terminal device.

Correspondingly, the first terminal device receives the device discovery message from the second terminal device. The device discovery message carries a first connection identifier 1, and the first connection identifier 1 is used to indicate that the second terminal device has detected the device discovery message from the first terminal device.

S1104: The first terminal device sends a device discovery response to the second terminal device based on the device discovery message from the second terminal device and the adjusted transceiving time sequence.

Correspondingly, the second terminal device receives the device discovery response from the first terminal device. The device discovery response is used to indicate to establish a communication connection between the first terminal device and the second terminal device.

For detailed procedures of S701 and S1101 to S1104, refer to related procedures in FIG. 9. Different from the method shown in FIG. 9, in the method shown in FIG. 11, a time-frequency resource available for the terminal device is a preconfigured time-frequency resource, and a transceiving time sequence available for the terminal device is a preconfigured transceiving time sequence.

### Scenario 8

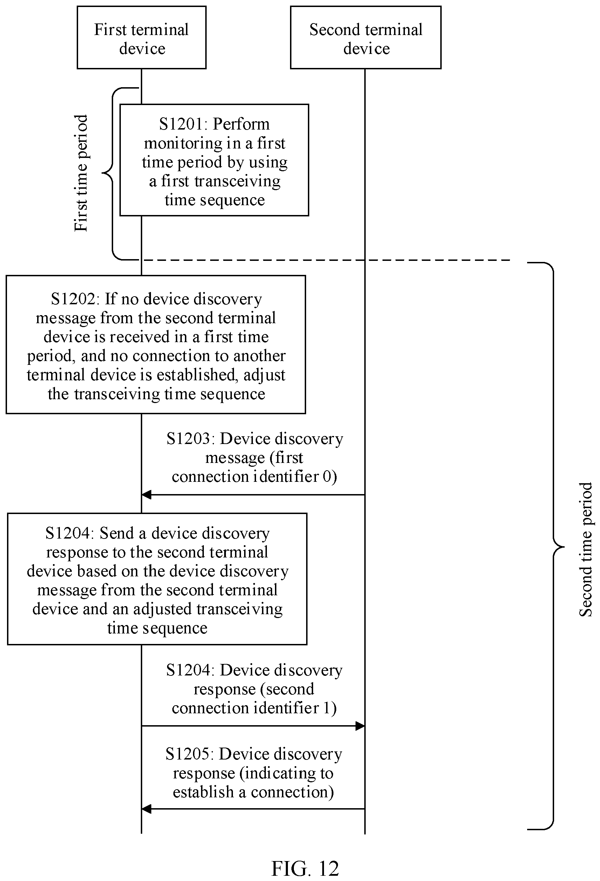

Referring to FIG. 12, an example in which there is no coverage by a base station, the second terminal device first sends a device discovery message to the first terminal device, time sequences of the first terminal device and the second terminal device are not synchronized in the first time period, and the first terminal device performs monitoring by using the first transceiving time sequence is used. The device discovery method provided in this embodiment of this application may specifically include the following steps.

S1201: The first terminal device performs monitoring in the first time period by using the first transceiving time sequence.

S1202: If the first terminal device does not receive a device discovery message from the second terminal device in the first time period, and the first terminal device does not establish a connection to another terminal device, the first terminal device adjusts the transceiving time sequence.

S1203: The second terminal device sends a device discovery message to the first terminal device.

Correspondingly, the first terminal device receives the device discovery message from the second terminal device.

The device discovery message sent by the second terminal device carries a first connection identifier 0, which is used to indicate that the device discovery message is a message actively sent by the second terminal device.

S1204: The first terminal device sends a device discovery response to the second terminal device based on the device discovery message from the second terminal device and the adjusted transceiving time sequence.

Correspondingly, the second terminal device receives the device discovery response from the first terminal device.

The device discovery response sent by the first terminal device carries a second connection identifier 1, and the second connection identifier 1 is used to indicate that the first terminal device has detected the device discovery message from the second terminal device.

S1205: The second terminal device sends a device discovery response to the first terminal device.

Correspondingly, the first terminal device receives the device discovery response from the second terminal device. The device discovery response is used to indicate to establish a communication connection between the first terminal device and the second terminal device.

For detailed procedures of S1201 to S1205, refer to related procedures in FIG. 10. Different from the method shown in FIG. 10, in the method shown in FIG. 12, a time-frequency resource available for the terminal device is a preconfigured time-frequency resource, and a transceiving time sequence available for the terminal device is a preconfigured transceiving time sequence.

It is easy to understand that, in FIG. 9 to FIG. 12, an example in which the first terminal device performs transceiving time sequence adjustment only once, and the transceiving time sequence of the first terminal device may be synchronized with that of the second terminal device is used. In actual application, the first terminal device may further need to perform transceiving time sequence adjustment for a plurality of times before the transceiving time sequence of the first terminal device is synchronized with the transceiving time sequence of the second terminal device. A specific quantity of adjustment times of the transceiving time sequence of the first terminal device is not limited in this embodiment of this application.

The solutions provided in the embodiments of this application are described above mainly from a perspective of interaction between the different network elements. It may be understood that, to implement the foregoing functions, the first terminal device, the second terminal device, and the access network device include corresponding hardware structures and/or software modules for performing the functions. With reference to the units and algorithm steps described in the embodiments disclosed in this application, the embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions of the embodiments of this application.

In the embodiments of this application, functional unit division may be performed on a device discovery apparatus based on the foregoing example of the method. For example, functional units may be divided based on corresponding functions, or two or more than two functions may be integrated into one processing unit. The integrated unit may be implemented in a form of hardware, or may be implemented in a form of a software functional unit. It should be noted that, in the embodiments of this application, division into the units is an example, and is merely a logical function division. In actual implementation, another division manner may be used.

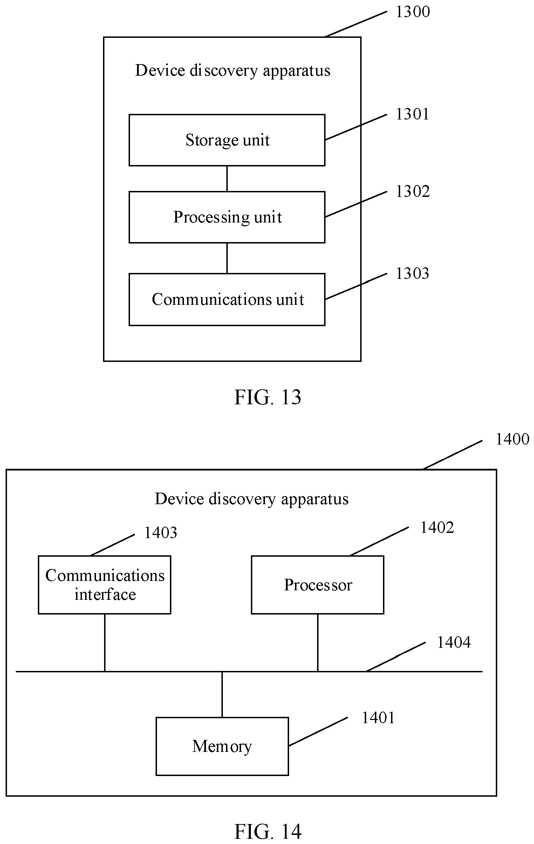

FIG. 13 is a schematic block diagram of a device discovery apparatus according to an embodiment of this application. The device discovery apparatus 1300 may exist in a form of software, or may be a device, or may be a chip of a device. The apparatus 1300 includes a processing unit 1302 and a communications unit 1303.

When the device discovery apparatus is configured to implement a function of the first terminal device, for example, the processing unit 1302 may be configured to support the apparatus 1300 in performing S904 in FIG. 9, S1004 in FIG. 10, and/or another process used for the solution described in this specification. The communications unit 1303 is configured to support communication between the apparatus 1300 and another network element (for example, a second terminal device). For example, the communications unit is configured to support the apparatus 1300 in performing S202 shown in FIG. 2, S503 shown in FIG. 5, and/or another process used for the solution described in this specification.

When the device discovery apparatus is configured to implement a function of the second terminal device in the foregoing method, for example, the processing unit 1302 may be configured to support the apparatus 1300 in performing transceiving time sequence adjustment when a transceiving time sequence of the apparatus 1300 is not synchronized with that of another terminal device, and/or another process used in the solution described in this specification. The communications unit 1303 is configured to support communication between the apparatus 1300 and another network element (for example, a first terminal device). For example, the communications unit is configured to support the apparatus 1300 in performing S202 shown in FIG. 2, S503 shown in FIG. 5, and/or another process used for the solution described in this specification.

When the device discovery apparatus is configured to implement a function of the access network device in the foregoing method, the processing unit 1302 may be configured to support the apparatus 1300 in determining an available time-frequency resource and an available transceiving time sequence of each terminal device, and/or another process used for the solution described in this specification. The communications unit 1303 is configured to support communication between the apparatus 1300 and another network element (for example, a first terminal device). For example, the communications unit 1303 is configured to support the apparatus 1300 in performing S501 and S502 shown in FIG. 5, and/or another process used for the solution described in this specification.

Optionally, the device discovery apparatus 1300 may further include a storage unit 1301, configured to store program code and data of the apparatus 1300. The data may include but is not limited to original data, intermediate data, or the like.

The processing unit 1302 may be a processor or a controller, for example, a CPU, a general-purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The communications unit 1303 may be a communications interface, a transceiver, a transceiver circuit, or the like. The communications interface is a general name. During specific implementation, the communications interface may include a plurality of interfaces, for example, an interface between a base station and a terminal and/or another interface.

The storage unit 1301 may be a memory.

When the processing unit 1302 is a processor, the communications unit 1303 is a communications interface, and the storage unit 1301 is a memory, the device discovery apparatus 1400 in this embodiment of this application may be shown in FIG. 14.

As shown in FIG. 14, the apparatus 1400 includes a processor 1402, a communications interface 1403, and a memory 1401. Optionally, the apparatus 1400 may further include a bus 1404. The communications interface 1403, the processor 1402, and the memory 1401 may be connected to each other by using the bus 1404. The bus 1404 may be a peripheral component interconnect (Peripheral Component Interconnect, PCI for short) bus, an extended industry standard architecture (Extended Industry Standard Architecture, EISA for short) bus, or the like. The bus 1404 may be classified into an address bus, a data bus, a control bus, and the like. For ease of representation, only one thick line is used to represent the bus in FIG. 14, but this does not mean that there is only one bus or only one type of bus.

A person of ordinary skill in the art may understand that all or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

In the several embodiments provided in this application, it should be understood that the disclosed system, apparatuses, and method may be implemented in other manners. For example, the described apparatus embodiments are merely examples. For example, division into units is merely logical function division and may be other division in actual implementation. For example, a plurality of units or components may be combined or integrated into another system, or some characteristics may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices (for example, a terminal). Some or all of the units may be selected based on actual requirements to achieve the objectives of the solutions of the embodiments.

In addition, functional units in the embodiments of this application may be integrated into one processing unit, or each of the functional units may exist alone, or two or more units are integrated into one unit. The integrated unit may be implemented in a form of hardware, or may be implemented in a form of hardware combined with a software functional unit.

Based on the foregoing descriptions of the implementation, a person skilled in the art may clearly understand that this application may be implemented by software in addition to necessary universal hardware or by hardware only. In most cases, the former is a better implementation. Based on such an understanding, the technical solutions of this application essentially or the part contributing to the prior art may be implemented in a form of a software product. The software product is stored in a readable storage medium, such as a floppy disk, a hard disk, or an optical disc of a computer, and includes several instructions for instructing a computer device (which may be a personal computer, a server, or a network device) to perform the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device discovery method, comprising:
performing, by a first terminal device, monitoring in a first time period by using a first transceiving time sequence; and
if the first terminal device receives a device discovery message from a second terminal device in the first time period, sending, by the first terminal device, a device discovery response to the second terminal device based on the device discovery message and the first transceiving time sequence; or
if the first terminal device does not receive a device discovery message from a second terminal device in the first time period, and the first terminal device does not establish a connection to another terminal device, performing, by the first terminal device after the first time period ends, monitoring in a second time period by using any one of the following transceiving time sequences: the first transceiving time sequence, a second transceiving time sequence, and a silent monitoring time sequence, wherein the second transceiving time sequence is opposite to the first transceiving time sequence, and the silent monitoring time sequence is used by the first terminal device for continuous monitoring.

2. The method according to claim 1, wherein the device discovery message comprises a first connection identifier, and/or a beam identifier, and/or a terminal identifier, and/or an identifier of a transceiving time sequence of the second terminal device; and
the beam identifier is used to indicate a sending direction of the device discovery message.

3. The method according to claim 2, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

4. The method according to claim 2, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

5. The method according to any one of claims 2 to 4, wherein the sending, by the first terminal device, a device discovery response to the second terminal device based on the device discovery message and the first transceiving time sequence comprises:
determining, by the first terminal device, the sending direction of the device discovery message based on the beam identifier; and
sending, by the first terminal device, the device discovery response to the second terminal device based on the first transceiving time sequence and the sending direction.

6. The method according to any one of claims 1 to 5, wherein the transceiving time sequence is used to indicate a rule of sending a beam and/or a rule of receiving a beam, and indicate a direction of sending a beam and/or a direction of receiving a beam.

7. The method according to any one of claims 1 to 6, wherein the method further comprises:
receiving, by the first terminal device, resource configuration information from an access network device, wherein the resource configuration information is used to indicate a time-frequency resource available for the first terminal device and/or indicate a transceiving time sequence available for the first terminal device.

8. The method according to claim 7, wherein the method further comprises: sending, by the first terminal device, a resource request to the access network device, wherein the resource request is used to request the time-frequency resource available for the first terminal device and/or request the transceiving time sequence available for the first terminal device.

9. The method according to any one of claims 1 to 6, wherein a time-frequency resource available for the first terminal device is a preconfigured resource, a transceiving time sequence available for the first terminal device is a preconfigured time sequence, and the preconfigured time sequence comprises the first transceiving time sequence, the second transceiving time sequence, or the silent monitoring time sequence.

10. The method according to any one of claims 1 to 9, wherein the performing, by a first terminal device, monitoring comprises: performing, by the first terminal device, monitoring by using a physical sidelink shared channel PSSCH; and
the sending, by the first terminal device, a device discovery response to the second terminal device comprises:
sending, by the first terminal device, the device discovery response to the second terminal device by using the PSSCH.

11. The method according to any one of claims 7 to 10, wherein
the time-frequency resource comprises a millimeter-wave band frequency domain resource.

12. A device discovery method, comprising:
sending, by a second terminal device, a device discovery message to a first terminal device, wherein the device discovery message comprises a first connection identifier, and/or a beam identifier, and/or a terminal identifier, and/or an identifier of a transceiving time sequence of the second terminal device; and
receiving, by the second terminal device, a device discovery response from the first terminal device.

13. The method according to claim 12, further comprising:
receiving, by the second terminal device, resource configuration information from an access network device, wherein the resource configuration information is used to indicate a time-frequency resource available for the second terminal device and/or indicate a transceiving time sequence available for the second terminal device.

14. The method according to claim 12, further comprising:
sending, by the second terminal device, a resource request to an access network device, wherein the resource request is used to request a time-frequency resource available for the second terminal device and/or request a transceiving time sequence available for the second terminal device.

15. The method according to any one of claims 12 to 14, wherein the sending, by a second terminal device, a device discovery message to a first terminal device comprises:
sending, by the second terminal device, the device discovery message to the first terminal device by using a physical sidelink shared channel PSSCH.

16. The method according to any one of claims 12 to 15, wherein the receiving, by the second terminal device, a device discovery response from the first terminal device comprises:
receiving, by the second terminal device, the device discovery response from the first terminal device by using the PSSCH.

17. The method according to any one of claims 12 to 16, wherein
the beam identifier is used to indicate a sending direction of the device discovery message.

18. The method according to any one of claims 12 to 17, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

19. The method according to any one of claims 12 to 18, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

20. The method according to any one of claims 12 to 19, wherein the transceiving time sequence is used to indicate a rule of sending a beam and/or a rule of receiving a beam, and indicate a direction of sending a beam and/or a direction of receiving a beam.

21. The method according to any one of claims 12 to 20, wherein a time-frequency resource available for the first terminal device is a preconfigured resource, a transceiving time sequence available for the first terminal device is a preconfigured time sequence, and the preconfigured time sequence comprises the first transceiving time sequence, the second transceiving time sequence, or the silent monitoring time sequence.

22. The method according to any one of claims 12 to 21, wherein the time-frequency resource comprises a millimeter-wave band frequency domain resource.

23. A device discovery method, comprising:
receiving, by an access network device, a resource request from a first terminal device or a second terminal device, wherein the resource request is used to request a time-frequency resource available for the first terminal device or the second terminal device, and/or request a transceiving time sequence available for the first terminal device or the second terminal device; and
sending, by the access network device, resource configuration information to the first terminal device or the second terminal device, wherein the resource configuration information is used to indicate the time-frequency resource available for the first terminal device or the second terminal device, and/or indicate the transceiving time sequence available for the first terminal device or the second terminal device.

24. A device discovery method, comprising:
receiving, by a first terminal, a first device discovery message from a second terminal, where the first device discovery message is used to indicate a transceiving time sequence used by the second terminal; and
sending, by the first terminal, a device discovery response in a receive time sequence of the second terminal based on the first device discovery message.

25. The method according to claim 24, further comprising:
if the first terminal does not detect the first device discovery message in a first time sequence within a preset time period, switching, by the first terminal, a transceiving time sequence from the first time sequence to a second time sequence, wherein the first time sequence comprises a configured time sequence, or a time sequence opposite to the configured time sequence, or a silent time sequence, the second time sequence comprises the configured time sequence, or the time sequence opposite to the configured time sequence, or the silent time sequence, a receive time sequence in the time sequence opposite to the configured time sequence is a transmit time sequence in the configured time sequence, and a transmit time sequence in the time sequence opposite to the configured time sequence is a receive time sequence in the configured time sequence.

26. The method according to claim 24 or 25, wherein the sending, by the first terminal, a device discovery response in a receive time sequence of the second terminal based on the first device discovery message comprises:
determining, by the first terminal, a second sending direction of the device discovery response based on a beam identifier, wherein the second sending direction is opposite to the first sending direction; and sending, by the first terminal, the device discovery response to the second terminal in the second sending direction and in the receive time sequence of the second terminal.

27. The method according to any one of claims 24 to 26, further comprising:
sending, by the first terminal, a resource request to an access network device, wherein the resource request is used to request a time-frequency resource used by the first terminal.

28. The method according to any one of claims 24 to 27, further comprising:
receiving, by the first terminal device, a resource configuration message from the access network device, wherein the resource configuration message is used to configure a time-frequency resource used by the first terminal and/or configure a transceiving time sequence used by the first terminal.

29. The method according to any one of claims 24 to 28, wherein the receiving, by a first terminal, a first device discovery message from a second terminal comprises:
receiving, by the first terminal, the first device discovery message by using a physical sidelink shared channel PSSCH.

30. The method according to any one of claims 24 to 29, wherein
the first device discovery message further comprises a beam identifier, and the beam identifier is used to indicate the first sending direction of the first device discovery message.

31. The method according to any one of claims 24 to 30, wherein
the device discovery response further comprises at least one of the beam identifier used to indicate the second sending direction, an identifier of the first terminal, and the transceiving time sequence of the first terminal.

32. The method according to claim 27, wherein
the time-frequency resource comprises a millimeter-wave band frequency domain resource.

33. A device discovery method, comprising:
sending, by a second terminal, a first device discovery message to a first terminal, wherein the first device discovery message is used to indicate a transceiving time sequence used by the second terminal; and
receiving, by the second terminal, a device discovery response from the first terminal in a receive time sequence of the second terminal.

34. The method according to claim 33, wherein the sending, by a second terminal, a first device discovery message to a first terminal comprises:
sending, by the second terminal, the first device discovery message to the first terminal by using a PSSCH.

35. The method according to claim 34, wherein the receiving, by the second terminal, a device discovery response from the first terminal in a receive time sequence of the second terminal comprises:
receiving, by the second terminal, the device discovery response from the first terminal in the receive time sequence of the second terminal by using the PSSCH.

36. The method according to any one of claims 33 to 35, wherein
the first device discovery message further comprises a beam identifier, and the beam identifier is used to indicate a first sending direction of the first device discovery message.

37. The method according to any one of claims 33 to 36, wherein
the device discovery response further comprises at least one of a beam identifier used to indicate a second sending direction, an identifier of the first terminal, and a transceiving time sequence of the first terminal.

38. A device discovery method, comprising:
sending, by an access network device, a resource configuration message, wherein the resource configuration message is used to configure a time-frequency resource used by a first terminal and configure a transceiving time sequence used by the first terminal.

39. The method according to claim 38, further comprising:
receiving, by the access network device, a resource request from the first terminal device, wherein the resource request is used to request the time-frequency resource used by the first terminal.

40. The method according to claim 39, wherein
the time-frequency resource comprises a millimeter-wave band frequency domain resource.

41. A device discovery method, applied to a device discovery system, wherein the system comprises a first terminal device and a second terminal device, or the system comprises a first terminal device, a second terminal device, and an access network device, and the method comprises:
performing, by the first terminal device, monitoring in a first time period by using a first transceiving time sequence;
sending, by the second terminal device, a device discovery message to the first terminal device; and
if the first terminal device receives the device discovery message from the second terminal device in the first time period, sending, by the first terminal device, a device discovery response to the second terminal device based on the device discovery message and the first transceiving time sequence; or
if the first terminal device does not receive the device discovery message from the second terminal device in the first time period, and the first terminal device does not establish a connection to another terminal device, performing, by the first terminal device after the first time period ends, monitoring in a second time period by using any one of the following transceiving time sequences: the first transceiving time sequence, a second transceiving time sequence, and a silent monitoring time sequence, wherein the second transceiving time sequence is opposite to the first transceiving time sequence, and the silent monitoring time sequence is used by the first terminal device for continuous monitoring.

42. The method according to claim 41, wherein the device discovery message comprises a first connection identifier, and/or a beam identifier, and/or a terminal identifier, and/or an identifier of a transceiving time sequence of the second terminal device; and the beam identifier is used to indicate a sending direction of the device discovery message.

43. The method according to claim 42, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

44. The method according to claim 42, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

45. The method according to any one of claims 42 to 44, wherein the sending, by the first terminal device, a device discovery response to the second terminal device based on the device discovery message and the first transceiving time sequence comprises:
determining, by the first terminal device, the sending direction of the device discovery message based on the beam identifier; and
sending, by the first terminal device, the device discovery response to the second terminal device based on the first transceiving time sequence and the sending direction.

46. The method according to any one of claims 41 to 45, wherein the transceiving time sequence is used to indicate a rule of sending a beam and/or a rule of receiving a beam, and indicate a direction of sending a beam and/or a direction of receiving a beam.

47. The method according to any one of claims 41 to 46, wherein the method further comprises:
receiving, by the first terminal device, resource configuration information from the access network device, wherein the resource configuration information is used to indicate a time-frequency resource available for the first terminal device and/or indicate a transceiving time sequence available for the first terminal device.

48. The method according to claim 47, wherein the method further comprises: sending, by the first terminal device, a resource request to the access network device, wherein the resource request is used to request the time-frequency resource available for the first terminal device and/or request the transceiving time sequence available for the first terminal device.

49. The method according to any one of claims 41 to 48, wherein the time-frequency resource available for the first terminal device is a preconfigured resource, the transceiving time sequence available for the first terminal device is a preconfigured time sequences, and the preconfigured time sequence comprises the first transceiving time sequence, the second transceiving time sequence, or the silent monitoring time sequence.

50. The method according to any one of claims 41 to 49, wherein the performing, by the first terminal device, monitoring comprises: performing, by the first terminal device, monitoring by using a physical sidelink shared channel PSSCH;
the sending, by the first terminal device, a device discovery response to the second terminal device comprises: sending, by the first terminal device, the device discovery response to the second terminal device by using the PSSCH; and
the time-frequency resource comprises a millimeter-wave band frequency domain resource.

51. A device discovery apparatus, wherein the apparatus comprises:
a control unit, configured to control a communications unit to perform monitoring in a first time period by using a first transceiving time sequence;
further configured to: if a first terminal device receives a device discovery message from a second terminal device in the first time period, control the communications unit to send a device discovery response to the second terminal device based on the device discovery message and the first transceiving time sequence; and
further configured to: if the first terminal device does not receive a device discovery message from the second terminal device in the first time period, and the first terminal device does not establish a connection to another terminal device, control the communications unit to perform, after the first time period ends, monitoring in a second time period by using any one of the following transceiving time sequences: the first transceiving time sequence, a second transceiving time sequence, and a silent monitoring time sequence, wherein the second transceiving time sequence is opposite to the first transceiving time sequence, and the silent monitoring time sequence is used by the first terminal device for continuous monitoring.

52. The apparatus according to claim 51, wherein the device discovery message comprises a first connection identifier, and/or a beam identifier, and/or a terminal identifier, and/or an identifier of a transceiving time sequence of the second terminal device; and
the beam identifier is used to indicate a sending direction of the device discovery message.

53. The apparatus according to claim 52, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

54. The apparatus according to claim 52, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

55. The apparatus according to any one of claims 52 to 54, wherein the control unit is further configured to:
determine the sending direction of the device discovery message based on the beam identifier, and control, based on the first transceiving time sequence, the communications unit to send the device discovery response to the second terminal device based on the sending direction.

56. The apparatus according to any one of claims 51 to 55, wherein the transceiving time sequence is used to indicate a rule of sending a beam and/or a rule of receiving a beam, and indicate a direction of sending a beam and/or a direction of receiving a beam.

57. The apparatus according to any one of claims 51 to 56, wherein
the communications unit is further configured to receive resource configuration information from an access network device, wherein the resource configuration information is used to indicate a time-frequency resource available for the first terminal device and/or indicate a transceiving time sequence available for the first terminal device.

58. The apparatus according to any one of claims 51 to 57, wherein
the communications unit is further configured to send a resource request to the access network device, wherein the resource request is used to request the time-frequency resource available for the first terminal device and/or request the transceiving time sequence available for the first terminal device.

59. The apparatus according to any one of claims 51 to 56, wherein the time-frequency resource available for the first terminal device is a preconfigured resource, the transceiving time sequence available for the first terminal device is a preconfigured time sequence, and the preconfigured time sequence comprises the first transceiving time sequence, the second transceiving time sequence, or the silent monitoring time sequence.

60. The apparatus according to any one of claims 51 to 57, wherein
the communications unit is further configured to perform monitoring by using a physical sidelink shared channel PSSCH, and send the device discovery response to the second terminal device by using the PSSCH.

61. The apparatus according to any one of claims 57 to 60, wherein
the time-frequency resource comprises a millimeter-wave band frequency domain resource.

62. A device discovery apparatus, wherein the apparatus comprises:
a communications unit, configured to send a device discovery message to a first terminal device, and receive a device discovery response from the first terminal device, wherein the device discovery message comprises a first connection identifier, and/or a beam identifier, and/or a terminal identifier, and/or an identifier of a transceiving time sequence of a second terminal device.

63. The apparatus according to claim 62, wherein
the communications unit is further configured to receive resource configuration information from an access network device, wherein the resource configuration information is used to indicate a time-frequency resource available for the second terminal device and/or indicate a transceiving time sequence available for the second terminal device.

64. The apparatus according to claim 62, wherein
the communications unit is further configured to send a resource request to the access network device, wherein the resource request is used to request the time-frequency resource available for the second terminal device and/or request the transceiving time sequence available for the second terminal device.

65. The apparatus according to any one of claims 62 to 64, wherein
that the communications unit is further configured to send the device discovery message to the first terminal device may be specifically implemented as: sending the device discovery message to the first terminal device by using a physical sidelink shared channel PSSCH.

66. The apparatus according to any one of claims 62 to 65, wherein
that the communications unit is further configured to receive the device discovery response from the first terminal device may be specifically implemented as: receiving the device discovery response from the first terminal device by using the PSSCH.

67. The apparatus according to any one of claims 62 to 66, wherein
the beam identifier is used to indicate a sending direction of the device discovery message.

68. The apparatus according to any one of claims 62 to 67, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

69. The apparatus according to any one of claims 62 to 68, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

70. The apparatus according to any one of claims 62 to 69, wherein the transceiving time sequence is used to indicate a rule of sending a beam and/or a rule of receiving a beam, and indicate a direction of sending a beam and/or a direction of receiving a beam.

71. The apparatus according to any one of claims 62 to 70, wherein a time-frequency resource available for the first terminal device is a preconfigured resource, a transceiving time sequence available for the first terminal device is a preconfigured time sequence, and the preconfigured time sequence comprises the first transceiving time sequence, the second transceiving time sequence, or the silent monitoring time sequence.

72. The apparatus according to any one of claims 62 to 71, wherein the time-frequency resource comprises a millimeter-wave band frequency domain resource.

73. A device discovery apparatus, wherein the apparatus comprises:
a communications unit, configured to receive a resource request from a first terminal device or a second terminal device, and further configured to send resource configuration information, wherein the resource request is used to request a time-frequency resource available for the first terminal device or the second terminal device, and/or request a transceiving time sequence available for the first terminal device or the second terminal device, and the resource configuration information is used to indicate the time-frequency resource available for the first terminal device or the second terminal device, and/or indicate the transceiving time sequence available for the first terminal device or the second terminal device.

74. A device discovery apparatus, comprising:
a communications unit, configured to receive a first device discovery message from a second terminal, wherein the first device discovery message is used to indicate a transceiving time sequence used by the second terminal; further configured to send a device discovery response in a receive time sequence of the second terminal based on the first device discovery message.

75. The apparatus according to claim 74, further comprising:
a control unit, configured to: if the first device discovery message is not detected in a first time sequence, switch a transceiving time sequence from the first time sequence to a second time sequence, wherein the first time sequence comprises a configured time sequence, or a time sequence opposite to the configured time sequence, or a silent time sequence, the second time sequence comprises the configured time sequence, or the time sequence opposite to the configured time sequence, or the silent time sequence, a receive time sequence in the time sequence opposite to the configured time sequence is a transmit time sequence in the configured time sequence, and a transmit time sequence in the time sequence opposite to the configured time sequence is a receive time sequence in the configured time sequence.

76. The apparatus according to claim 74 or 75, wherein
the communications unit is further configured to: determine a second sending direction of the device discovery response based on a beam identifier, wherein the second sending direction is opposite to a first sending direction; and send the device discovery response to the second terminal in the second sending direction and in the receive time sequence of the second terminal.

77. The apparatus according to any one of claims 74 to 76, wherein
the communications unit is further configured to send a resource request to an access network device, wherein the resource request is used to request a time-frequency resource used by the terminal.

78. The apparatus according to any one of claims 74 to 77, wherein the communications unit is further configured to receive a resource configuration message from the access network device, wherein the resource configuration message is used to configure the time-frequency resource used by the terminal and configure a transceiving time sequence used by the terminal.

79. The apparatus according to any one of claims 74 to 78, wherein
the communications unit is further configured to receive the first device discovery message by using a physical sidelink shared channel PSSCH.

80. The apparatus according to any one of claims 74 to 79, wherein
the first device discovery message further comprises a beam identifier, and the beam identifier is used to indicate the first sending direction of the first device discovery message.

81. The apparatus according to any one of claims 74 to 80, wherein
the device discovery response further comprises at least one of the beam identifier used to indicate the second sending direction, an identifier of the terminal, and the transceiving time sequence of the terminal.

82. The apparatus according to claim 77, wherein
the time-frequency resource comprises a millimeter-wave band frequency domain resource.

83. A device discovery apparatus, comprising:
a communications unit, configured to send a first device discovery message to a first terminal, wherein the first device discovery message is used to indicate, to the communications unit, a transceiving time sequence used by a terminal; and further configured to receive a device discovery response from the first terminal in a receive time sequence of the terminal.

84. The apparatus according to claim 83, wherein
the communications unit is further configured to send the first device discovery message to the first terminal by using a PSSCH.

85. The apparatus according to claim 84, wherein
the communications unit is further configured to receive the device discovery response from the first terminal in the receive time sequence of the terminal by using the PSSCH.

86. The apparatus according to any one of claims 83 to 85, wherein
the first device discovery message further comprises a beam identifier, and the beam identifier is used to indicate a first sending direction of the first device discovery message.

87. The apparatus according to any one of claims 83 to 86, wherein
the device discovery response further comprises at least one of a beam identifier used to indicate a second sending direction, an identifier of the first terminal, and a transceiving time sequence of the first terminal.

88. A device discovery apparatus, comprising:
a communications unit, configured to send a resource configuration message, wherein the resource configuration message is used to configure a time-frequency resource used by a first terminal and configure a transceiving time sequence used by the first terminal.

89. The apparatus according to claim 88, wherein
the communications unit is further configured to receive a resource request from the first terminal device, wherein the resource request is used to request the time-frequency resource used by the first terminal.

90. The apparatus according to claim 89, wherein
the time-frequency resource comprises a millimeter-wave band frequency domain resource.

91. A communications device, comprising:
a processor, configured to control a communications interface to perform monitoring in a first time period by using a first transceiving time sequence;
further configured to: if a first terminal device receives a device discovery message from a second terminal device in the first time period, control the communications interface to send a device discovery response to the second terminal device based on the device discovery message and the first transceiving time sequence; and
further configured to: if the first terminal device does not receive a device discovery message from the second terminal device in the first time period, and the first terminal device does not establish a connection to another terminal device, control the communications interface to perform, after the first time period ends, monitoring in a second time period by using any one of the following transceiving time sequences: the first transceiving time sequence, a second transceiving time sequence, and a silent monitoring time sequence, wherein the second transceiving time sequence is opposite to the first transceiving time sequence, and the silent monitoring time sequence is used by the first terminal device for continuous monitoring.

92. The communications device according to claim 91, wherein
the device discovery message comprises a first connection identifier, and/or a beam identifier, and/or a terminal identifier, and/or an identifier of a transceiving time sequence of the second terminal device; and
the beam identifier is used to indicate a sending direction of the device discovery message.

93. The communications device according to claim 92, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

94. The communications device according to claim 92, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

95. The communications device according to any one of claims 92 to 94, wherein
the processor is further configured to: determine the sending direction of the device discovery message based on the beam identifier, and control, based on the first transceiving time sequence, the communications interface to send the device discovery response to the second terminal device based on the sending direction.

96. The communications device according to any one of claims 91 to 95, wherein the transceiving time sequence is used to indicate a rule of sending a beam and/or a rule of receiving a beam, and indicate a direction of sending a beam and/or a direction of receiving a beam.

97. The communications device according to any one of claims 91 to 96, wherein
the communications interface is further configured to receive resource configuration information from an access network device, wherein the resource configuration information is used to indicate a time-frequency resource available for the first terminal device and/or indicate a transceiving time sequence available for the first terminal device.

98. The communications device according to any one of claims 91 to 97, wherein
the communications interface is further configured to send a resource request to the access network device, wherein the resource request is used to request the time-frequency resource available for the first terminal device and/or request the transceiving time sequence available for the first terminal device.

99. The communications device according to any one of claims 91 to 96, wherein the time-frequency resource available for the first terminal device is a preconfigured resource, the transceiving time sequence available for the first terminal device is a preconfigured time sequence, and the preconfigured time sequence comprises the first transceiving time sequence, the second transceiving time sequence, or the silent monitoring time sequence.

100. The communications device according to any one of claims 91 to 97, wherein
the communications interface is further configured to perform monitoring by using a physical sidelink shared channel PSSCH, and send the device discovery response to the second terminal device by using the PSSCH.

101. The communications device according to any one of claims 97 to 100, wherein
the time-frequency resource comprises a millimeter-wave band frequency domain resource.

102. A communications device, comprising:
a communications interface, configured to send a device discovery message to a first terminal device, and receive a device discovery response from the first terminal device, wherein the device discovery message comprises a first connection identifier, and/or a beam identifier, and/or a terminal identifier, and/or an identifier of a transceiving time sequence of a second terminal device.

103. The communications device according to claim 102, wherein
the communications interface is further configured to receive resource configuration information from an access network device, wherein the resource configuration information is used to indicate a time-frequency resource available for the second terminal device and/or indicate a transceiving time sequence available for the second terminal device.

104. The communications device according to claim 102, wherein
the communications interface is further configured to send a resource request to the access network device, wherein the resource request is used to request the time-frequency resource available for the second terminal device and/or request the transceiving time sequence available for the second terminal device.

105. The communications device according to any one of claims 102 to 104, wherein
that the communications interface is further configured to send the device discovery message to the first terminal device may be specifically implemented as: sending the device discovery message to the first terminal device by using a physical sidelink shared channel PSSCH.

106. The communications device according to any one of claims 102 to 105, wherein
that the communications interface is further configured to receive the device discovery response from the first terminal device may be specifically implemented as: receiving the device discovery response from the first terminal device by using the PSSCH.

107. The communications device according to any one of claims 102 to 106, wherein
the beam identifier is used to indicate a sending direction of the device discovery message.

108. The communications device according to any one of claims 102 to 107, wherein
the first connection identifier is used to indicate that the device discovery message is sent by the second terminal device to the first terminal device after the second terminal device detects a device discovery message from the first terminal device; and
the device discovery response is used to indicate to establish a connection between the first terminal device and the second terminal device.

109. The communications device according to any one of claims 102 to 108, wherein
the first connection identifier is used to indicate that the device discovery message is not sent by the second terminal device to the first terminal device after the second terminal device detects a device discovery message from the first terminal device; and
the device discovery response comprises a second connection identifier, and the second connection identifier is used to indicate that the first terminal device detects the device discovery message from the second terminal device.

110. The communications device according to any one of claims 102 to 109, wherein the transceiving time sequence is used to indicate a rule of sending a beam and/or a rule of receiving a beam, and indicate a direction of sending a beam and/or a direction of receiving a beam.

111. The communications device according to any one of claims 102 to 110, wherein a time-frequency resource available for the first terminal device is a preconfigured resource, a transceiving time sequence available for the first terminal device is a preconfigured time sequence, and the preconfigured time sequence comprises the first transceiving time sequence, the second transceiving time sequence, or the silent monitoring time sequence.

112. The communications device according to any one of claims 102 to 111, wherein the time-frequency resource comprises a millimeter-wave band frequency domain resource.

113. A communications device, comprising:
a communications interface, configured to receive a resource request from a first terminal device or a second terminal device, and further configured to send resource configuration information, wherein the resource request is used to request a time-frequency resource available for the first terminal device or the second terminal device, and/or request a transceiving time sequence available for the first terminal device or the second terminal device, and the resource configuration information is used to indicate the time-frequency resource available for the first terminal device or the second terminal device, and/or indicate the transceiving time sequence available for the first terminal device or the second terminal device.

114. A communications device, comprising:
a communications interface, configured to receive a first device discovery message from a second terminal, wherein the first device discovery message is used to indicate a transceiving time sequence used by the second terminal; further configured to send a device discovery response in a receive time sequence of the second terminal based on the first device discovery message.

115. The communications device according to claim 114, further comprising:
a processor, configured to: if the first device discovery message is not detected in a first time sequence, switch a transceiving time sequence from the first time sequence to a second time sequence, wherein the first time sequence comprises a configured time sequence, or a time sequence opposite to the configured time sequence, or a silent time sequence, the second time sequence comprises the configured time sequence, or the time sequence opposite to the configured time sequence, or the silent time sequence, a receive time sequence in the time sequence opposite to the configured time sequence is a transmit time sequence in the configured time sequence, and a transmit time sequence in the time sequence opposite to the configured time sequence is a receive time sequence in the configured time sequence.

116. The communications device according to claim 114 or 115, wherein
the communications interface is further configured to: determine a second sending direction of the device discovery response based on a beam identifier, wherein the second sending direction is opposite to a first sending direction; and send the device discovery response to the second terminal in the second sending direction and in the receive time sequence of the second terminal.

117. The communications device according to any one of claims 114 to 116, wherein
the communications interface is further configured to send a resource request to an access network device, wherein the resource request is used to request a time-frequency resource used by the terminal.

118. The communications device according to any one of claims 114 to 117, wherein the communications interface is further configured to receive a resource configuration message from the access network device, wherein the resource configuration message is used to configure the time-frequency resource used by the terminal and configure a transceiving time sequence used by the terminal.

119. The communications device according to any one of claims 114 to 118, wherein
the communications interface is further configured to receive the first device discovery message by using a physical sidelink shared channel PSSCH.

120. The communications device according to any one of claims 114 to 119, wherein
the first device discovery message further comprises a beam identifier, and the beam identifier is used to indicate a first sending direction of the first device discovery message.

121. The communications device according to any one of claims 114 to 120, wherein
the device discovery response further comprises at least one of the beam identifier used to indicate the second sending direction, an identifier of the terminal, and the transceiving time sequence of the terminal.

122. The communications device according to claim 117, wherein
the time-frequency resource comprises a millimeter-wave band frequency domain resource.

123. A communications device, comprising:
a communications interface, configured to send a first device discovery message to a first terminal, wherein the first device discovery message is used to indicate, to the communications interface, a transceiving time sequence used by a terminal; and further configured to receive a device discovery response from the first terminal in a receive time sequence of the terminal.

124. The communications device according to claim 123, wherein
the communications interface is further configured to send the first device discovery message to the first terminal by using a PSSCH.

125. The communications device according to claim 124, wherein
the communications interface is further configured to receive the device discovery response from the first terminal in the receive time sequence of the terminal by using the PSSCH.

126. The communications device according to any one of claims 123 to 125, wherein
the first device discovery message further comprises a beam identifier, and the beam identifier is used to indicate a first sending direction of the first device discovery message.

127. The communications device according to any one of claims 123 to 126, wherein
the device discovery response further comprises at least one of a beam identifier used to indicate a second sending direction, an identifier of the first terminal, and a transceiving time sequence of the first terminal.

128. A communications device, comprising:
a communications interface, configured to send a resource configuration message, wherein the resource configuration message is used to configure a time-frequency resource used by a first terminal and configure a transceiving time sequence used by the first terminal.

129. The communications device according to claim 128, wherein
the communications interface is further configured to receive a resource request from the first terminal device, wherein the resource request is used to request the time-frequency resource used by the first terminal.

130. The communications device according to claim 129, wherein
the time-frequency resource comprises a millimeter-wave band frequency domain resource.

131. A communications system, wherein the system comprises a first terminal device and a second terminal device, wherein
the first terminal device performs monitoring in a first time period by using a first transceiving time sequence; the second terminal device sends a device discovery message to the first terminal device; and
if the first terminal device receives the device discovery message from the second terminal device in the first time period, the first terminal device sends a device discovery response to the second terminal device based on the device discovery message and the first transceiving time sequence; or
if the first terminal device does not receive the device discovery message from the second terminal device in the first time period, and the first terminal device does not establish a connection to another terminal device, after the first time period ends, the first terminal device performs monitoring in a second time period by using any one of the following transceiving time sequences: the first transceiving time sequence, a second transceiving time sequence, and a silent monitoring time sequence, wherein the second transceiving time sequence is opposite to the first transceiving time sequence, and the silent monitoring time sequence is used by the first terminal device for continuous monitoring.

132. The communications system according to claim 131, further comprising an access network device, wherein
the access network device receives a resource request from the first terminal device or the second terminal device, and sends resource configuration information to the first terminal device or the second terminal device, wherein the resource request is used to request a time-frequency resource available for the first terminal device or the second terminal device, and/or request a transceiving time sequence available for the first terminal device or the second terminal device, and the resource configuration information is used to indicate the time-frequency resource available for the first terminal device or the second terminal device, and/or indicate the transceiving time sequence available for the first terminal device or the second terminal device.

133. A communications system, wherein the system comprises a first terminal device and a second terminal device, wherein
the first terminal receives a first device discovery message from a second terminal, wherein the first device discovery message is used to indicate a transceiving time sequence used by the second terminal; and sends a device discovery response in a receive time sequence of the second terminal based on the first device discovery message; and
the second terminal sends the first device discovery message to the first terminal, wherein the first device discovery message is used to indicate the transceiving time sequence used by the second terminal; and receives the device discovery response from the first terminal in the receive time sequence of the second terminal.

134. The communications system according to claim 133, further comprising an access network device, wherein the access network device sends a resource configuration message, wherein the resource configuration message is used to configure a time-frequency resource used by the first terminal and configure a transceiving time sequence used by the first terminal.

135. A communications device, comprising a memory, a processor, and a computer program that is stored in the memory and that can be run on the processor, wherein when executing the program, the processor implements the method according to any one of claims 1 to 11, or implements the method according to any one of claims 12 to 22, or implements the method according to claim 23, or implements the method according to any one of claims 24 to 32, or implements the method according to any one of claims 33 to 37, or implements the method according to any one of claims 38 to 40.

136. An apparatus, wherein the apparatus comprises a processor, and the processor is configured to: be coupled to a memory, read instructions in the memory, and perform, according to the instructions, the method according to any one of claims 1 to 11, or perform, according to the instructions, the method according to any one of claims 12 to 22, or perform, according to the instructions, the method according to claim 23, or perform, according to the instructions, the method according to any one of claims 24 to 32, or perform, according to the instructions, the method according to any one of claims 33 to 37, or perform, according to the instructions, the method according to any one of claims 38 to 40.

137. A computer readable storage medium, comprising instructions, wherein when the instructions are run on a computer, the computer is enabled to perform the method according to any one of claims 1 to 11, or perform the method according to any one of claims 12 to 22, or perform the method according to claim 23, or perform the method according to any one of claims 24 to 32, or perform the method according to any one of claims 33 to 37, or perform the method according to any one of claims 38 to 40.

138. A computer program product, wherein when the computer program product is run on a computer, the computer is enabled to perform the method according to any one of claims 1 to 11, or the computer is enabled to perform the method according to any one of claims 12 to 22, or the computer is enabled to perform the method according to claim 23, or the computer is enabled to perform the method according to any one of claims 24 to 32, or the computer is enabled to perform the method according to any one of claims 33 to 37, or the computer is enabled to perform the method according to any one of claims 38 to 40.

139. A chip, connected to a memory or comprising a memory, and configured to read and execute a software program stored in the memory, to implement the method according to any one of claims 1 to 11, or implement the method according to any one of claims 12 to 22, or implement the method according to claim 23, or implement the method according to any one of claims 24 to 32, or implement the method according to any one of claims 33 to 37, or implement the method according to any one of claims 38 to 40.
